(19) Europäisches Patentamt
European Patent Office
Office européen des brevets

(11) **EP 2 755 435 B1**

(12) **EUROPEAN PATENT SPECIFICATION**

(45) Date of publication and mention of the grant of the patent:
**28.02.2018 Bulletin 2018/09**

(51) Int Cl.:
*H04B 7/02* (2018.01)     *H04B 7/04* (2017.01)
*H04B 7/06* (2006.01)     *H04W 24/02* (2009.01)
*H04B 7/022* (2017.01)     *H04B 7/0456* (2017.01)

(21) Application number: **12839707.2**

(22) Date of filing: **14.06.2012**

(86) International application number:
**PCT/CN2012/076902**

(87) International publication number:
**WO 2013/053242 (18.04.2013 Gazette 2013/16)**

(54) **MULTI-ACCESS POINT CALIBRATION METHOD AND DEVICE**

VERFAHREN UND VORRICHTUNG ZUR KALIBRIERUNG MEHRERER ZUGANGSPUNKTE

PROCÉDÉ ET DISPOSITIF D'ÉTALONNAGE DE POINT D'ACCÈS MULTIPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2011 CN 201110304926**

(43) Date of publication of application:
**16.07.2014 Bulletin 2014/29**

(73) Proprietor: **ZTE Corporation**
**Shenzhen, Guangdong 518057 (CN)**

(72) Inventors:
• **ZHAO, Yajun**
  **Shenzhen**
  **Guangdong 518057 (CN)**
• **BI, Cunlei**
  **Shenzhen**
  **Guangdong 518057 (CN)**
• **LI, Yujie**
  **Shenzhen**
  **Guangdong 518057 (CN)**
• **MO, Linmei**
  **Shenzhen**
  **Guangdong 518057 (CN)**
• **QIN, Hongfeng**
  **Shenzhen**
  **Guangdong 518057 (CN)**
• **SHI, Fan**
  **Shenzhen**
  **Guangdong 518057 (CN)**
• **WANG, Qian**
  **Shenzhen**
  **Guangdong 518057 (CN)**
• **SUN, Yunfeng**
  **Shenzhen**
  **Guangdong 518057 (CN)**
• **XU, Hanqing**
  **Shenzhen**
  **Guangdong 518057 (CN)**
• **SUN, Baoyu**
  **Shenzhen**
  **Guangdong 518057 (CN)**

(74) Representative: **Carangelo, Pierluigi et al**
**Jacobacci & Partners S.p.A.**
**Via Tomacelli 146**
**00186 Roma (IT)**

(56) References cited:
**WO-A1-2011/019357     WO-A1-2011/054144**
**CN-A- 101 778 467     CN-A- 102 158 293**
**US-A1- 2006 148 509**

• **FAN HUANG ET AL: "Performance Analysis of Antenna Calibration in Coordinated Multi-Point Transmission System", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031696137, ISBN: 978-1-4244-2518-1**

**(Cont. next page)**

- **LI QIANG ET AL: "Zero-Forcing Beamforming with Limited Feedback in Coordinated Multi-Point Transmission", WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23 September 2010 (2010-09-23), pages 1-4, XP031827871, ISBN: 978-1-4244-3708-5**

**Description**

Technical Field

The present invention relates to the field of communication, in particular to a method and apparatus for calibrating multiple access points.

Background

With the continuously increasing demand of people for the future communication, more attention is paid to the cell edge spectral efficiency. How to improve the transmission quality and handling capacity of the cell edge becomes focus for many people to study. The technique of Coordinated Multi-Point (CoMP) uses antennae of multiple access points for coordinated transmission and reception. One or more access points are provided in a cell, the multiple coordinated points of the CoMP may be multiple access points from one cell, or may be multiple access points from multiple cells, wherein the multiple cells include a main cell and coordinated cells of a terminal. CoMP can effectively solve the interference problem at the cell edge so as to improve the capacity and the reliability of a wireless link. Therefore, the CoMP technology, as a key technology, is introduced to a Long Term Evolution-Advanced (LTE-A) system.

Under the Time Division Duplexing (TDD) mode of a CoMP system, the uplink and downlink parameter (wherein a key parameter is phase) differences of different Remote Radio Units (RRU) are different, that is, the result of antenna calibration is: $H_{UL} = cH_{DL}$, wherein c is a complex scalar of deviation between uplink and downlink. The c value has no influence to a single access point; however, as the c values of different access points are different, a phase difference brought by the deviation of a residual complex value c exists among different access points, and hence, phase difference exists between data jointly transmitted (JT) by different access points, which causes that desirable coherent transmission cannot be performed among access points, and further results in the reduction of the system performance.

Documents D1 (FAN HUANG ET AL: "Performance Analysis of Antenna Calibration in Coordinated Multi-Point Transmission System",VTC 2010-SPRING, ISBN: 978-1-4244-2518-1) and D2 (WO 2011/054144 A1) provide related technical solutions; however, the above mentioned problem still remains unsolved.

Summary

The present invention provides a method and apparatus for calibrating multiple access points to at least solve the problem of the reduction of the system performance caused by the fact that desirable coherent transmission cannot be performed among access points due to the parameter difference existing between data jointly transmitted by different access points.

An embodiment of the present invention provides a method for calibrating multiple access points. The method includes: a cell receiving at least one parameter of at least one downlink channel of multiple access points, wherein the at least one parameter is fed back by user equipment (UE) and includes one of the following: time, phase, amplitude, time as well as amplitude, and phase as well as amplitude; calculating at least one parameter difference between at least one uplink channel and the at least one downlink channel of the multiple access points according to the at least one parameter of the at least one downlink channel; and calibrating the multiple access points according to the at least one parameter difference.

Preferably, before the cell receives the at least one parameter of the at least one downlink channel fed back by the UE, the method further includes: the cell configuring the UE to measure the at least one downlink channel.

Preferably, the cell configuring the UE to measure the at least one downlink channel includes: under the condition that the multiple access points have not performed self-calibration, the cell configuring the UE to measure downlink channels of all antenna ports.

Preferably, the cell receiving the at least one parameter of the at least one downlink channel fed back by the UE includes: the UE receiving parameters of the downlink channels of all the antenna ports, fed back by means of one of the following manners by the UE: qualified as a codebook, feeding back downlink channel matrices, and feeding back main characteristic information of the downlink channel matrices.

Preferably, calculating the at least one parameter difference between the at least one uplink channel and the at least one downlink channel according to the at least one parameter of the at least one downlink channel includes: the cell measuring parameters of uplink channels of all the antenna ports; and the cell calculating parameter differences between the uplink channels and the downlink channels according to the parameters of the uplink channels of all the antenna ports and the parameters of the downlink channels of all the antenna ports.

Preferably, the cell configuring the UE to measure the at least one downlink channel includes: under the condition that the multiple access points have performed self-calibration, the cell configuring the UE to measure at least one downlink channel of at least one antenna port in all the antenna ports of each access point in the multiple access points.

Preferably, the cell receiving the at least one parameter of the at least one downlink channel fed back by the UE includes: under the condition that the cell configures the UE to measure at least one downlink channel of one antenna port in all the antenna ports of the each access point, the cell receiving at least one parameter of the at least one downlink channel of the antenna port, fed back by means of one of the following manners by the UE: feeding back at least one downlink channel matrix, feeding back main characteristic information of the at least one downlink channel matrix, and feeding back at least one phase of at least one downlink channel of a single port.

Preferably, calculating the at least one parameter difference between the at least one uplink channel and the at least one downlink channel according to the at least one parameter of the at least one downlink channel includes: the cell measuring at least one parameter of at least one uplink channel of the at least one antenna port of the each access point; and the cell calculating the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point.

Preferably, the cell measuring the at least one parameter of the at least one uplink channel of the at least one antenna port of the each access point includes: the cell using a signal sent at a time point adjacent to sending of a downlink signal of a downlink channel as an uplink signal of an uplink channel; and the cell measuring the uplink signal to obtain the at least one parameter of the at least one uplink channel of the at least one antenna port of the each access point.

Preferably, the cell measuring the at least one parameter of the at least one uplink channel of the at least one antenna port of the each access point includes: the cell measuring the at least one parameter of the at least one uplink channel of the at least one antenna port of the each access point with respect to one and the same UE at the same time.

Preferably, the cell measuring the at least one parameter of the at least one uplink channel of the at least one antenna port of the each access point includes: methods for respective access points to process the at least one uplink channel being the same.

Preferably, the cell calculating the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point includes: under the condition that the UE feeds back the at least one parameter of the at least one downlink channel of the at least one antenna port by feeding back the at least one downlink channel matrix or feeding back the main characteristic information of the at least one downlink channel matrix, the cell transposing at least one uplink channel matrix used for indicating the at least one parameter of the at least one uplink channel of the at least one antenna port of the each access point to obtain at least one equivalent downlink channel matrix; the cell comparing the at least one equivalent downlink channel matrix with the at least one downlink channel matrix fed back by the UE; and the cell calculating the at least one parameter difference between the at least one uplink channel and the at least one downlink channel according to a comparison result.

Preferably, the cell calculating the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point includes: under the condition that the UE feeds back the at least one parameter of the at least one downlink channel of the at least one antenna port by being qualified as a codebook, the cell transposing at least one uplink channel matrix used for indicating the at least one parameter of the at least one uplink channel of the at least one antenna port of the each access point to obtain at least one equivalent downlink channel matrix; the cell calculating a qualified codebook based on the at least one equivalent downlink channel matrix; the cell comparing the codebook fed back by the UE with the codebook calculated by the cell based on the at least one equivalent downlink channel matrix; and the cell calculating the at least one parameter difference between the at least one uplink channel and the at least one downlink channel according to a comparison result.

Preferably, the cell calculating the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point includes: the cell only calculating a parameter difference between one uplink channel and one downlink channel for each access point.

Preferably, the cell configuring the UE to measure the at least one downlink channel includes: under the condition that the multiple access points have performed self-calibration, the cell configuring the UE to measure at least one downlink channel of at least one antenna port in all the antenna ports of the multiple access points.

Preferably, the cell configuring the UE to measure the at least one downlink channel of the at least one antenna port in all the antenna ports of the multiple access points includes: the cell configuring the UE to measure precoding information, wherein the precoding information is calculated by the UE according to at least one channel between the UE and the multiple access points, and the at least one channel is obtained by measuring according to at least one downlink reference signal sent by the multiple access points.

Preferably, before calculating the at least one parameter difference between the at least one uplink channel and the at least one downlink channel of the multiple access points according to the at least one parameter of the at least one downlink channel, the method further includes: the cell obtaining at least one parameter of at least one uplink channel between the UE and the multiple access points according to at least one uplink reference signal; and the cell obtaining at least one parameter of at least one downlink channel according to the at least one uplink channel and making use of channel reciprocity.

Preferably, the cell obtaining the parameter of the uplink channel between the UE and the multiple access points according to an uplink reference signal includes: calculating the parameter difference between the uplink channel and the downlink channel of the multiple access points according to the downlink channel parameter obtained by the precoding information and making use of channel reciprocity.

Preferably, calculating the at least one parameter difference between the at least one uplink channel and the at least one downlink channel of the multiple access points according to the at least one parameter of the at least one downlink channel includes: step A, selecting a first parameter difference and a second parameter difference in a possible parameter difference range to respectively obtain a first corrected downlink channel corresponding to the first parameter difference and a second corrected downlink channel corresponding to the second parameter difference; step B, based on the precoding information, determining, in the first corrected downlink channel and the second corrected downlink channel, that the first corrected downlink channel is closer to a real downlink channel; step C, determining the first parameter difference to serve as a calculated parameter difference; and iterating the step A to the step C to obtain the calculated parameter difference.

Preferably, the cell configuring the UE to measure the precoding information includes: the cell configuring the UE to measure precoding matrix indicator (PMI), wherein the PMI is calculated by the UE according to at least one channel between the UE and the multiple access points in the same cell, and the at least one channel is obtained by measuring according to at least one cell specific reference signal (CRS) sent by the multiple access points.

Preferably, before calculating the at least one parameter difference between the at least one uplink channel and the at least one downlink channel of the multiple access points according to the at least one parameter of the at least one downlink channel, the method further includes: the cell obtaining at least one parameter of at least one uplink channel between the UE and the multiple access points according to at least one uplink sounding reference signal (SRS); and the cell obtaining at least one parameter of the at least one downlink channel according to the at least one uplink channel and making use of channel reciprocity.

Preferably, calculating the at least one parameter difference between the at least one uplink channel and the at least one downlink channel of the multiple access points according to the at least one parameter of the at least one downlink channel includes: calculating the at least one parameter difference between the at least one uplink channel and the at least one downlink channel of the multiple access points according to the PMI and the at least one parameter of the at least one downlink channel obtained by making use of the channel reciprocity.

Preferably, calculating the at least one parameter difference between the at least one uplink channel and the at least one downlink channel of the multiple access points according to the at least one parameter of the at least one downlink channel includes: step A, selecting a first parameter difference and a second parameter difference in a possible parameter difference range to respectively obtain a first corrected downlink channel corresponding to the first parameter difference and a second corrected downlink channel corresponding to the second parameter difference; step B, based on the PMI, determining, in the first corrected downlink channel and the second corrected downlink channel, that the first corrected downlink channel is closer to a real downlink channel; step C, determining the first parameter difference to serve as the calculated parameter difference; and iterating the step A to the step C to obtain the calculated parameter difference.

An embodiment of the present invention provides an apparatus for calibrating multiple access points. The apparatus includes: a receiving module, configured to receive at least one parameter of at least one downlink channel fed back by user equipment (UE); a calculation module, configured to calculate at least one parameter difference between at least one uplink channel and the at least one downlink channel according to the at least one parameter of the at least one downlink channel; and a calibration module, configured to calibrate multiple access points according to the at least one parameter difference.

Through the embodiments of the present invention, the cell accurately calculates at least one parameter difference between different access points, then multiple access points can be calibrated according to the at least one parameter difference so as to guarantee the excellent coherent transmission among multiple access points, thereby further guaranteeing the performance of the system.

Brief Description of the Drawings

Drawings, provided for further understanding of the present invention and forming a part of the specification, are used to explain the present invention together with embodiments of the present invention rather than to limit the present invention. In the drawings:

Fig. 1 is a flow chart of a method for calibrating multiple access points according to an embodiment of the present invention;

Fig. 2 is a block diagram of an apparatus for calibrating multiple access points according to an embodiment of the present invention.

Detailed Description of the Embodiments

Note that, the embodiments of the present invention and the features of the embodiments can be combined with each other if there is no conflict. The present invention will be explained below with reference to the drawings and in conjunction with the embodiments in detail.

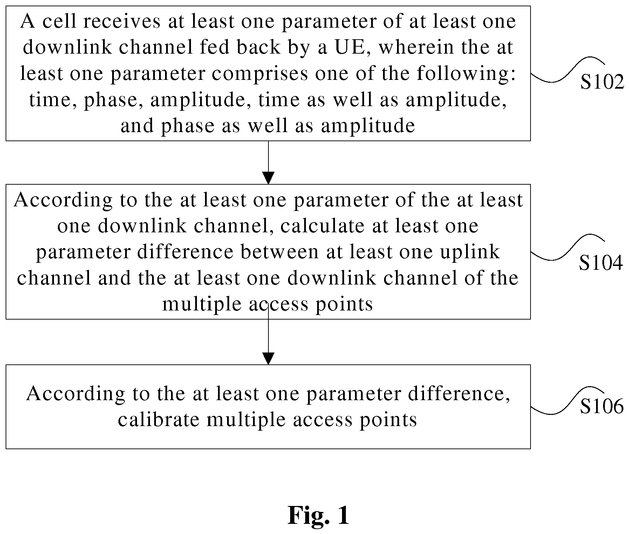

Fig. 1 is a flow chart of a method for calibrating multiple access points according to an embodiment of the present invention. As shown in Fig. 1, the method includes the following step S102 to step S106.

In Step S102, a cell receives at least one parameter of at least one downlink channel of multiple access points fed back by the UE, wherein the at least one parameter includes one of the following: time, phase, amplitude, time as well as amplitude, and phase as well as amplitude.

In Step S104, according to the at least one parameter of the at least one downlink channel, at least one parameter difference between at least one uplink channel and the at least one downlink channel of the multiple access points is calculated.

In Step S106, according to the at least one parameter difference, multiple access points are calibrated.

In related technologies, parameter (wherein a key parameter is the phase) difference existing between data transmitted by different access points causes that desirable coherent transmission between access points cannot be performed among access points, and further resulting in the reduction of the system performance. In the embodiment of the present invention, the cell accurately calculates the at least one parameter difference between different access points, then multiple access points can be calibrated according to the at least one parameter difference so as to guarantee the desirable coherent transmission between access points so as to ensure the system performance.

In order to accurately calculate the at least one parameter difference between different access points, an embodiment of the present invention also needs to accurately configure the UE to measure the at least one downlink channel, configuring the UE to measure the at least one downlink channel is described in details below from two aspects: configuration where the multiple access points have not performed self-calibration, and configuration where the multiple access points have performed self-calibration.

(1) Under the condition that the multiple access points have not performed self-calibration, the cell needs to accurately calculate and calibrate parameter differences of the downlink channels of all the antenna ports of the different access points. Therefore, the cell configures the UE to measure the downlink channels of all the antenna ports, then the UE feeds back the parameters of the downlink channels of all the antenna ports by means of: being qualified to be a codebook, or feeding back the downlink channel matrices, or feeding back main characteristic information of the downlink channel matrices.

At the same time, under the condition that the multiple access points have not performed self-calibration, the cell measures the parameters of the uplink channels of all the antenna ports. Then, the cell calculates parameter differences between the uplink channels and the downlink channels according to the parameters of the uplink channels of all the antenna ports and the parameters of the downlink channels of all the antenna ports.

(2) Under the condition that the multiple access points have performed self-calibration, the cell only needs to select part of antenna ports in each access point of the different access points to perform accurate calculation and calibration on at least one parameter difference of at least one downlink channel. Therefore, the cell configures the UE to measure at least one downlink channel of at least one antenna port in all the antenna ports. Then the UE feeds back at least one parameter of at least one downlink channel of all the antenna ports to the cell.

It should be noted that under the condition that the cell configures the UE to measure downlink channels of multiple antenna ports in all the antenna ports, the UE feeds back parameters of the downlink channels of all the antenna ports by means of being qualified to be a codebook, or feeding back the downlink channel matrices, or feeding back main characteristic information of the downlink channel matrices. Under the condition that the cell configures the UE to measure at least one downlink channel of one antenna port in all the antenna ports, the UE feeds back at least one parameter of the at least one downlink channel of all the antenna ports by means of feeding back at least one downlink channel matrix, or feeding back main characteristic information of the at least one downlink channel matrix, or feeding back a phase value of a single port.

At the same time, under the condition that the multiple access points have performed self-calibration, the cell measures at least one parameter of at least one uplink channel of at least one antenna port. Then, the cell calculates at least one parameter difference between the at least one uplink channel and the at least one downlink channel according to the at least one parameter of the at least one uplink channel of at least one antenna port and the at least one parameter of the at least one downlink channel of at least one antenna port. The measurement procedure and the calculation procedure are described respectively in detail below.

In the above-mentioned measurement procedures, the cell can use a signal sent at a time point adjacent to sending of a downlink signal of a downlink channel as an uplink signal of an uplink channel; and the cell measures the uplink signal to obtain the at least one parameter of the at least one uplink channel of at least one antenna port of each access point. More preferably, the cell can use a reference signal of an adjacent uplink or downlink time slot of the downlink signal as an uplink signal. In addition, in the above-mentioned measurement procedures, the cell measures the at least one parameter of the at least one uplink channel of at least one antenna port of each access point with respect to one and the same UE at the same time.

In the above-mentioned measurement procedures, the methods for all the access points to process the at least one uplink channel are the same.

In the above-mentioned calculation procedure, under the condition that the UE feeds back the at least one parameter of the at least one downlink channel of the at least one antenna port by feeding back at least one downlink channel matrix, or feeding back the main characteristic information of the at least one downlink channel matrix, the cell transposes at least one uplink channel matrix used for indicating at least one parameter of at least one uplink channel of at least one antenna port of each access point to obtain at least one equivalent downlink channel matrix; the cell compares the at least one equivalent downlink channel matrix with the at least one downlink channel matrix fed back by the UE; and the cell calculates the at least one parameter difference between the at least one uplink channel and the at least one downlink channel according to the comparison result. Or, under the condition that the UE feeds back the at least one parameter of the at least one downlink channel of the at least one antenna port by being qualified to be a codebook, the cell transposes at least one uplink channel matrix used for indicating the at least one parameter of the at least one uplink channel of at least one antenna port of each access point to obtain at least one equivalent downlink channel matrix; the cell calculates a qualified codebook based on the at least one equivalent downlink channel matrix; the cell compares the codebook fed back by the UE with the codebook obtained by the cell on the basis of the at least one equivalent downlink channel matrix; and the cell calculates the at least one parameter difference between the at least one uplink channel and the at least one downlink channel according to the comparison result.

In the above-mentioned calculation steps, the cell only calculates one parameter difference between one uplink channel and one downlink channel of each access point.

The implementation process of the embodiments of the present invention is described in details with reference to the embodiments below.

For convenience of description, it is supposed that there are N access points, denoted by access points i, i = 1, 2,..., N, and it is supposed that access point 1 belongs to a serving cell, other access points belong to other coordination cells in a coordinative collection; each access point has Mi antenna ports, i = 1, 2,..., N; and CoMP UE has L antennae.

It is defined that $\mathbf{H}_{i,j}^{DL(k)}$ is a frequency domain channel response of a downlink channel between the jth antenna port in the kth access point and the ith receiving antenna of the UE, $\varphi_{i,j}^{DL(k)}$ is a corresponding phase value, wherein j = 1,2,...,Mk, i = 1, 2,..., L; $\mathbf{H}_{i,j}^{UL(k)}$ is a frequency domain channel response of an uplink channel between the ith antenna port in the kth access point and the jth receiving antenna of the UE, $\varphi_{i,j}^{UL(k)}$ is a corresponding phase value, wherein i = 1, 2,..., Mk, j = 1, 2,...,L.

It should be noted that, the following preferred embodiments only take the phase as an example for description, in practical application, the technical solution of adopting parameters such as time, amplitude, time as well as amplitude, and phase as well as amplitude all should fall within the protection scope of the present invention.

Preferred embodiment I

The present preferred embodiment I describes the condition where each RRU/access point do not perform antenna self-calibration.

(1) The serving cell configures at least one antenna port of each RRU/access point to be measured by the UE and the granularity for the phase feedback, and sends a downlink reference signal on each corresponding antenna port. The serving cell configures the UE to measure all the antenna ports of each RRU/access point.

The configured frequency domain granularity for the phase feedback may be an RE (resource element), or an RB (resource block), or a subband, or the system bandwidth of the whole cell, or other frequency domain units.

The above-mentioned downlink reference signal may be a CSI-RS (Channel Status Information Reference Signal). The downlink reference signal may be multiplexed and sent, among RRUs/access points, by means of frequency division, or code division, or time division, or the mixed mode of the preceding three manners.

(2) According to the configuration of the serving cell, the UE selects one antenna, supposing the first receiving antenna, for receiving and measuring the frequency domain channel response between the UE and each RRU/access point, and the UE feeds back the phase value of the above-mentioned frequency domain channel response to the serving cell.

According to the configuration of the serving cell, the UE measures the frequency domain channel response $H_{1,j}^{DL(k)}$ between the first receiving antenna and all the antenna ports of each RRU/access point, and calculates the phase value thereof $\varphi_{1,j}^{DL(k)}$, k = 1,2,...,N; j = 1,2,...,Mk.

The above-mentioned phase value fed back may be qualified by using equal intervals, for example, adopting 5 bit feedback, with the quantitative granularity being 360 degrees/32 = 11.25 degrees.

(3) The UE sends a reference signal on the first antenna. Each RRU/access point receives the above-mentioned reference signal according to the configuration of the serving cell and calculates the phase value of the frequency domain channel response.

An interface between the above-mentioned serving cell and each RRU/access point may be an X2 interface, and also may be other interfaces.

The above-mentioned reference signal may be a sounding reference signal (SRS).

According to the configuration of the serving cell, each RRU/access point measures the frequency domain channel response $H_{j,1}^{UL(k)}$ of all the antenna ports, and calculates the phase value thereof $\varphi_{j,1}^{UL(k)}$, k = 1,2,...,N; j = 1, 2,..., Mk.

(4) The serving cell calculates the reciprocity error between the uplink channel and the downlink channel of each RRU/access point respectively, according to the downlink channel phases corresponding to all the RRUs fed back by the UE and the phases measured and calculated by the cell on the basis of the uplink channel matrix.

An interface between the above-mentioned serving cell and each RRU/access point may be an X2 interface, and also may be other interfaces.

According to the configuration of the serving cell, the method for calculating the reciprocity error between the uplink channel and the downlink channel for each RRU/access point and all the antenna ports may also be:

$$\varphi_{l,i}^{DL(k)} - \varphi_{i,l}^{UL(k)}, \text{ k = 1,2,...,N.}$$

Preferred embodiment II

The present preferred embodiment II describes the condition where each RRU/access point performs antenna self-calibration. The embodiment is based on non-codebook.

(1) Each RRU/access point performs antenna self-calibration.

The above-mentioned self-calibration method may be an existing method based on a calibration network, or a method based on a non-calibration network.

(2) The serving cell triggers a certain CoMP UE to perform assistant calibration, and configures the moment and times for UE measurement, at least one antenna port of each RRU/access point to be measured, and the granularity for phase feedback.

The above-mentioned trigger mode may be that the serving cell triggers for once, and then the UE measures and feeds back at a subsequent configured measurement moment.

It also may be that the serving cell triggers for once, and then the UE measures and feeds back at N subsequent configured measurement moments.

Preferably, the serving cell configures the UE to measure one antenna port of each RRU/access point, supposing the first antenna port of each RRU/access point.

It also may be that the serving cell configures the UE to measure all the antenna ports of each RRU/access point.

It also may be that the serving cell configures the UE to measure a part of antenna ports of each RRU/access point, supposing the previous N antenna ports of each RRU/access point, i = 1,2,...,N.

The configured frequency domain granularity for the phase feedback may be an RE (resource element), or an RB (resource block), or a subband, or the system bandwidth of the whole cell, or other frequency domain units.

(3) Each RRU/access point sends a downlink reference signal on the measurement moment and port configured by the serving cell in the above-mentioned step 2.

The above-mentioned downlink reference signal may be a CSI-RS (Channel Status Information Reference Signal). The downlink reference signal may be multiplexed and sent, among RRUs/access points, by means of frequency division, or code division, or time division, or the mixed mode of the preceding three manners.

(4) According to the configuration of the serving cell, the UE selects one antenna, supposing the first receiving antenna, for receiving and measuring the frequency domain channel response between the UE and each RRU/access point, and the UE feeds back the phase value of the above-mentioned frequency domain channel response to the serving cell.

According to the configuration of the serving cell, preferably, the UE measures the frequency domain channel response $H_{1,1}^{DL(k)}$ between the first receiving antenna and the first antenna port of each RRU/access point, and calculates the phase value thereof $\varphi_{1,1}^{DL(k)}$, k = 1,2,...,N.

According to the configuration of the serving cell, the UE may also measure the frequency domain channel response $H_{1,j}^{DL(k)}$ between the first receiving antenna and all the antenna ports of each RRU/access point, and calculates the phase value thereof $\varphi_{1,j}^{DL(k)}$, k = 1,2,...,N; j = 1,2,...,Mk.

According to the configuration of the serving cell, the UE may also measure the frequency domain channel response $H_{1,j}^{DL(k)}$ between the first receiving antenna and part of the antenna ports of each RRU/access point, and calculates the phase value thereof $\varphi_{1,j}^{DL(k)}$, k = 1,2,...,N; j = 1,2,...,Nk.

The above-mentioned phase value fed back may be qualified by using equal intervals, for example, adopting 5 bit feedback, with the quantitative granularity being 360 degrees/32 = 11.25 degrees.

(5) The UE sends a reference signal on the first antenna. The serving cell sends the configuration information for the UE in the above-mentioned step 2 to each RRU/access point, and each RRU/access point receives the above-mentioned reference signal according to the configuration of the serving cell, and calculates the phase value of the frequency domain channel response.

An interface between the above-mentioned serving cell and each RRU/access point may be an X2 interface, and also may be other interfaces.

The above-mentioned reference signal may be a sounding reference signal (SRS).

According to the configuration of the serving cell, preferably, each RRU/access point measures the frequency domain channel response of the first antenna port $H_{1,1}^{UL(k)}$, and calculate the phase value thereof $\varphi_{1,1}^{UL(k)}$, k = 1,2,...,N.

According to the configuration of the serving cell, each RRU/access point may also measure the frequency domain channel response of all the antenna ports $H_{j,1}^{UL(k)}$, and calculate the phase value thereof $\varphi_{j,1}^{UL(k)}$, k = 1,2,...,N; j = 1, 2,..., Mk.

According to the configuration of the serving cell, each RRU/access point may also measure the frequency domain channel response of a part of the antenna ports $H_{j,1}^{UL(k)}$, and calculate the phase value thereof $\varphi_{j,1}^{UL(k)}$, k = 1,2,...,N; j = 1, 2,..., Nk.

(6) The serving cell calculates the reciprocity error of the uplink channel and the downlink channel of each RRU/access point respectively, according to the downlink channel phases corresponding to all the RRUs fed back by the UE and the phases measured and calculated by the cell on the basis of the uplink channel matrix.

As the self-calibration is performed on the above-mentioned step (1), only one reciprocity error between the uplink channel and the downlink channel is required to be calculated for each RRU.

An interface between the above-mentioned serving cell and each RRU/access point may be an X2 interface, and also may be other interfaces.

According to the configuration of the serving cell, preferably, the method for calculating the reciprocity error between the uplink channel and the downlink channel for each RRU/access point may also be $\varphi_{1,1}^{DL(k)} - \varphi_{1,1}^{UL(k)}$, k = 1,2,...,N.

According to the configuration of the serving cell, the method for calculating the reciprocity error between the uplink channel and the downlink channel for each RRU/access point may also be $\dfrac{1}{M_k}\sum_{i=1}^{M_k}(\varphi_{1,i}^{DL(k)} - \varphi_{i,1}^{UL(k)})$, k = 1,2,...,N.

According to the configuration of the serving cell, the method for calculating the reciprocity error between the uplink channel and the downlink channel for each RRU/access point may also be: $\dfrac{1}{N_k}\sum_{i=1}^{N_k}(\varphi_{1,i}^{DL(k)} - \varphi_{i,1}^{UL(k)})$, k = 1,2,...,N.

(7) The parameters for sending signals by each RRU are adjusted on the basis of the reciprocity error between the uplink channel and the downlink channel calculated by each RRU/access point.

Preferred embodiment III

The present preferred embodiment III describes a condition where each RRU/access point performs antenna self-calibration. The embodiment is based on codebook.

(1) Each RRU/access point performs antenna self-calibration.
The above-mentioned self-calibration method may be an existing method based on a calibration network, or a method based on a non-calibration network.
(2) The serving cell triggers a certain CoMP UE to perform assistant calibration, and configures the moment and times for UE measurement, at least one antenna port of each RRU/access point to be measured, and the granularity for phase feedback.

The above-mentioned trigger mode may be that the serving cell triggers for once, and then the UE measures and feeds back at a subsequent configured measurement moment.

It also may be that the serving cell triggers for once, and then the UE measures and feeds back at N subsequent configured measurement moments.

Preferably, the serving cell configures the UE to measure one antenna port of each RRU/access point, supposing the first antenna port of each RRU/access point.

It also may be that the serving cell configures the UE to measure all the antenna ports of each RRU/access point.

It also may be that the serving cell configures the UE to measure a part of antenna ports of each RRU/access point, supposing the previous N antenna ports of each RRU/access point, i = 1,2,...,N.

The configured frequency domain granularity for the phase feedback may be an RE (resource element), or a RB (resource block), or a subband, or the system bandwidth of a whole cell, or other frequency domain units.

(3) Each RRU/access point sends a downlink reference signal on the measurement moment and port configured by the serving cell in the above-mentioned step 2.
The above-mentioned downlink reference signal may be a CSI-RS (Channel Status Information Reference Signal). The downlink reference signal may be multiplexed and sent, among RRUs/access points, by means of frequency division, or code division, or time division, or the mixed mode of the preceding three manners.
(4) According to the configuration of the serving cell, the UE selects one or more receiving antennae, and a preferred scheme is selecting one receiving antenna. Taking selecting the first receiving antenna as an example (the basic steps are the same when adopting more receiving antennae), the frequency domain channel response between the UE and each RRU/access point is received and measured. A precoding vector is calculated and selected based on the above-mentioned frequency domain channel response and is fed back to the serving cell. The realizing manner of the measurement and calculation may be that:

according to the configuration of the serving cell, preferably, the UE measures the frequency domain channel response between the first receiving antenna and the first antenna port of each RRU/access point $H_{1,1}^{DL(k)}$, calculates the phase value thereof $\varphi_{1,1}^{DL(k)}$, k = 1,2,...,N, and feeds back same to the serving cell; or,

according to the configuration of the serving cell, the UE may also measure the frequency domain channel response between the first receiving antenna and all the antenna ports of each RRU/access point $H_{1,j}^{DL(k)}$, calculate and select a precoding vector based on the above-mentioned frequency domain channel response, and feed back same to the serving cell; or,

according to the configuration of the serving cell, the UE may also measure the frequency domain channel response between the first receiving antenna and part of the antenna ports of each RRU/access point $H_{1,j}^{DL(k)}$, calculate and select a precoding vector based on the above-mentioned frequency domain channel response, and feed back same to the serving cell.

The above-mentioned precoding vector may be selected from a pre-defined codebook collection, that is, selecting a corresponding precoding matrix indicator (PMI), wherein the PMI is fed back to indicate the corresponding precoding vector thereof. A codebook collection for feeding back multi-input-multi-output (MIMO) on the basis of codebook may be reused to serve as the codebook collection in the current embodiment.

(5) If the UE is configured to adopt one receiving antenna in step (4), the UE sends the reference signal on the antenna. If the UE is configured to adopt multiple receiving antennae in step (4), the UE sends the reference signal on the corresponding plurality of antennae. The serving cell sends the configuration information for the UE in the above-mentioned step 2 to each RRU/access point, and each RRU/access point receives the above-mentioned reference signal according to the configuration of the serving cell, calculates the phase value of the frequency domain channel response, and calculates and selects the precoding vector on the basis of the above-mentioned frequency domain channel response.

An interface between the above-mentioned serving cell and each RRU/access point may be an X2 interface, and also can be other interfaces.

The above-mentioned reference signal may be a sounding reference signal (SRS).

(6) The serving cell calculates the reciprocity error between the uplink channel and the downlink channel of each RRU/access point respectively, according to the downlink channel phase or PMI corresponding to each RRU fed back by the UE and the phase or PMI measured and calculated by the cell on the basis of the uplink channel matrix.

An interface between the above-mentioned serving cell and each RRU/access point may be an X2 interface, and also may be other interfaces.

As the self-calibration is performed on the above-mentioned step (1), only one reciprocity error between the uplink channel and the downlink channel is required to be calculated for each RRU.

(7) The parameters for sending signals by each RRU are adjusted on the basis of the reciprocity error between the uplink channel and the downlink channel calculated by each RRU/access point.

Preferred embodiment IV

The present preferred embodiment IV describes the condition where each RRU/access point has performed antenna self-calibration. The embodiment is based on joint precoding of multiple access points. Two RRUs are taken as an example, supposing RRU1 and RRU2. The described method is also suitable for a scene having more than two RRUs. In the embodiment, the two technical terms, i.e., RRU and access point, are the same concept.

Step 1, Each RRU/access point performs antenna self-calibration.

The above-mentioned self-calibration method may be an existing method based on a calibration network, or a method based on a non-calibration network.

Step 2, the cell configures certain one or a plurality of UEs to perform assistant calibration

The method for calibrating multiple access points is described in detail below by scheme 1 and scheme 2, respectively.

Scheme 1:

(a) The UE is configured to feed back joint precoding information of multiple RRUs, wherein the multiple RRUs may come from one and the same cell, and also may come from different cells. The precoding information may be global precoding information of multiple RRUs (such as a global codebook PMI_JT) or global precoding information of a single RRU (such as independent codebook of each RRU) added with correlative information among RRUs (such as phase difference information (PCI) among RRUs);

(b) The UE is configured with downlink reference signal (such as CSI-RS) resource information to be measured. The CSI-RS resource information may include CSI-RS resource information and/or RRU identifiers and/or cell identifiers corresponding to target RRUs;

(c) Preferably, during measurement, the UE can be configured to perform PMI measurement on the basis of supposing RANK = 1 as default. But the normal RANK and PMI measurement of a scheduling target can be different from this configuration, it can be still configured normally according to the practical channel condition;

(d) Preferably, a new measurement event is added: the measurement to the primary phase difference and/or amplitude difference among cells/eNBs/RRUs;

(1) A single UE or a UE group is configured to perform measurement;

(2) The UE is configured with the CSI-RS resource information to be measured. CSI-RS resource information and/or RRU identifiers and/or cell identifiers corresponding to target RRUs may be included. Preferably, the difference values of two RRUs are measured;

(3) A UE having no downlink service also may be scheduled for measurement;

(4) Preferably, during measurement, the UE can be configured to perform PMI measurement on the basis of supposing RANK = 1 as default. But the normal RANK and PMI measurement of a scheduling target can be different from this configuration, it can be still configured normally according to the practical channel condition;

(5) Trigger and measurement modes can be set as event trigger, period/single report/multiple reports, etc.

(e) The UE selection condition may be: based on channel fading, selecting a UE which can receive stronger signals from two target RRUs and weaker signals from other RRUs. The RRU with weak signals has less influence to the UE when calculating PMI.

(f) Two RRUs are set

(1) The UE is configured to measure the CSI-RS (Channel Status Information Reference Signal) sent by the two RRUs, and the UE obtains channels $H_{CSI-RS} = \begin{bmatrix} H_{RRU1} \\ H_{RRU2} \end{bmatrix}$ based on the CSI-RS;

(2) The UE measures on the basis of $H_{CSI\text{-}RS}$ to obtain $PMI_{UE}$ and feeds it back to the cell;

(3) The cell obtains uplink channels $H_{SRS\text{-}RRU1}$ and $H_{SRS\text{-}RRU2}$ corresponding to the two RRUs respectively on the basis of an uplink reference signal (such as SRS). Corresponding downlink channels $H'_{SRS\text{-}RRU1}$ and $H'_{SRS\text{-}RRU2}$ are obtained by using the channel reciprocity. It is assumed that $H_{RRU1} = A_1 e^{j\theta_1} H'_{SRS\text{-}RRU1}$, and

$H_{RRU2}$ = $A_2 e^{j\theta_2}H'_{SRS-RRU2}$, then the channel can be equivalently synthetized to be

$$H_{CSI-RS} = \begin{bmatrix} A_1 e^{j\theta_1} H'_{SRS-RRU1} \\ A_2 e^{j\theta_2} H'_{SRS-RRU2} \end{bmatrix} = A_1 e^{j\theta_1} \begin{bmatrix} H'_{SRS-RRU1} \\ \dfrac{A_2}{A_1} e^{j(\theta_2-\theta_1)} H'_{SRS-RRU2} \end{bmatrix}.$$

(4) Because the coefficient $A_1 e^{j\theta_1}$ does not affect the calculation of PMI, we only consider the coefficient $\dfrac{A_2}{A_1} e^{j(\theta_2-\theta_1)}$. It is assumed that $\Delta\theta = \theta_2 - \theta_1$, and $\Delta A = \dfrac{A_2}{A_1}$.

Method 1: The estimation correction is only performed for phase $\Delta\theta$, it is supposed that $\Delta A$ has no influence, that is, it is supposed that $\Delta A = 1$. $\beta$ is searched or evaluated, so that $\beta$ is approximately equal to $\Delta\theta$ in a permitted error range.

It is assumed that $H_{\beta 1} = \begin{bmatrix} H'_{SRS-RRU1} \\ e^{j\beta 1} H'_{SRS-RRU2} \end{bmatrix}$, and $H_{\beta 2} = \begin{bmatrix} H'_{SRS-RRU1} \\ e^{j\beta 2} H'_{SRS-RRU2} \end{bmatrix}$, $\beta 1$ and $\beta 2$ belong to the value range of the estimated phase difference $\Delta\theta$. The phase estimation judgement is achieved by using the following one manner or the combination of multiple manners, and the phase difference $\Delta\theta$ is finally estimated through multiple iteration traversals:

Manner 1, it is assumed that $PMI_{UE}$. corresponds to precoding matrix $W\_PMI'_{UE}$, if there is a stronger correlation between $W\_PMI'_{UE}$ and $H_{\beta 1}$, for example, $\|H_{\beta 1} W\_PMI'_{UE}\|$ is greater than $\|H_{\beta 2} W\_PMI'_{UE}\|$, it is considered that $\beta 1$ is closer to $\Delta\theta$;

Manner 2, it is assumed that $PMI_{UE}$ corresponds to precoding matrix $W\_PMI'_{UE}$. A precoding matrix $W_{\beta 1}$ is obtained based on $H_{\beta 1}$, a precoding matrix $W_{\beta 2}$ is obtained based on $H_{\beta 2}$, if there is a stronger correlation between $W\_PMI'_{UE}$ and $W_{\beta 1}$, for example, $\|W_{\beta 1} W\_PMI'_{UE}\|$ is greater than $\|W_{\beta 2} W\_PMI'_{UE}\|$, it is considered that $\beta 1$ is closer to $\Delta\theta$;

Manner 3, $PMI_{\beta 1}$ and $PMI_{\beta 2}$ are respectively obtained based on $H_{\beta 1}$ and $H_{\beta 2}$, if $PMI_{\beta 1} = PMI_{UE}$, it is considered that $\beta 1$ is closer to $\Delta\theta$;

Manner 4, a plurality of $PMI_{\beta 1}$ and $PMI_{\beta 2}$ are respectively obtained based on a plurality of $H_{\beta 1}$ and $H_{\beta 2}$ of frequency domain and/or time domain, and statistics is collected for N times. If the number of times n1 where $PMI_{\beta 1} = PMI_{UE}$ is true is greater than the number of times n2 where $PMI_{\beta 2} = PMI_{UE}$ is true, it is considered that $\beta 1$ is closer to $\Delta\theta$;

Manner 5, a set $\{PMI_{\beta 1}(1), PMI_{\beta 1}(2), ..., PMI_{\beta 1}(k1),...\}$ of $PMI_{\beta 1}$, which ranking from high to low according to the priority is obtained based on $H_{\beta 1}$, a set $\{PMI_{\beta 2}(1), PMI_{\beta 2}(2), ...., PMI_{\beta 2}(k2),...\}$ of $PMI_{\beta 2}$, which ranking from high to low according to the priority is obtained based on $H_{\beta 2}$, it is assumed that $PMI_{\beta 1}(k1) = PMI_{UE}$, and $PMI_{\beta 2}(k2) = PMI_{UE}$, if k1 is less than k2, it is considered that $\beta 1$ is closer to $\Delta\theta$. The above ranking from high to low according to the priority refers to that according to the PMI measurement and selection principle, the higher the priority is, the better the precoding matrix corresponding to the PMI is;

Manner 6, a plurality of $PMI_{\beta 1}$ and $PMI_{\beta 2}$ are respectively obtained based on a plurality of $H_{\beta 1}$ and $H_{\beta 2}$ of frequency domain and/or time domain. A set $\{PMI_{\beta 1}(1), PMI_{\beta 1}(2), ..., PMI_{\beta 1}(k1),...\}$ of $PMI_{\beta 1}$, which ranking from high to low according to the priority is obtained based on $H_{\beta 1}(i)$, a set $[PMI_{\beta 2}(1), PMI_{\beta 2}(2), ..., PMI_{\beta 2}(k2)....\}$ of $PMI_{\beta 2}$, which ranking from high to low according to the priority is obtained based on $H_{\beta 2}(i)$, it is assumed that $PMI_{\beta 1}(k1) = PMI_{UE}$, and $PMI_{\beta 2}(k2) = PMI_{UE}$. The statistics is collected for N times, if $\sum_{i=1}^{N} k2(i) > \sum_{i=1}^{N} k1(i)$, it is considered that $\beta 1$ is closer to $\Delta\theta$. The above ranking from high to low according to the priority refers to that according to the PMI measurement and selection principle, the higher the priority is, the better the precoding matrix corresponding to the PMI is.

Manner 7, because the deviation between RRU1 and RRU2 is a system deviation, that is, as long as meeting the UE selection condition of the above-mentioned step (2), a plurality of UEs can be selected at the same time. A plurality of UEs can be measured and estimated at the same time in the above-mentioned schemes so as to obtain a better estimation result.

Method 2: estimation is performed on the phase $\Delta\theta$ and the amplitude $\Delta\mathbf{A}$ at the same time

A phase estimation value P is obtained by estimation, and the phase $\Delta\theta$ is corrected separately; an amplitude estimation value $\alpha$ is obtained by estimation, and the amplitude $\Delta\mathbf{A}$ is corrected separately; a phase estimation value $\beta$ and an amplitude estimation value $\alpha$ are obtained by estimation, and the phase $\Delta\theta$ and the amplitude $\Delta\mathbf{A}$ are corrected at the same time.

$\beta$ and are searched or evaluated, so that $\beta$ is approximately equal to $\Delta\theta$ in a permitted error range and at the same time, $\alpha$ is approximately equal to $\Delta\mathbf{A}$ in a permitted error range. Preferably, the QAM constellation point mapping rule can be adopted to select the combination of traversal amplitude and phase at the same time.

It is assumed that $H_{\beta1} = \begin{bmatrix} H'_{SRS-RRU1} \\ \alpha1 e^{j\beta1} H'_{SRS-RRU2} \end{bmatrix}$, and $H_{\beta2} = \begin{bmatrix} H'_{SRS-RRU1} \\ \alpha2 e^{j\beta2} H'_{SRS-RRU2} \end{bmatrix}$, $\beta1$ and $\beta2$ belong

to the value range of the estimated phase difference $\Delta\theta$, and $\alpha1$ and $\alpha2$ belong to the value range of the estimated amplitude difference $\Delta A$. The phase estimation judgement is achieved by using the following one manner or the combination of multiple manners, and the phase difference $\Delta\theta$ and the amplitude difference $\Delta\mathbf{A}$ are finally estimated through multiple iteration traversals:

Manner 1, it is assumed that $PMI_{UE}$ corresponds to precoding matrix $W\_PMI'_{UE}$. if there is stronger correlation between $W\_PMI'_{UE}$ and $H_{\beta1}$, for example, $\|H_{\beta1} W\_PMI'_{UE}\|$ is greater than $\|H_{\beta2} W\_PMI'_{UE}\|$, it is considered that $\beta1$ is closer to $\Delta\theta$, $\alpha1$ is closer to $\Delta A$;

Manner 2, it is assumed that $PMI_{UE}$ corresponds to precoding matrix $W\_PMI'_{UE}$. A precoding matrix $W_{\beta1}$ is obtained based on $H_{\beta1}$, a precoding matrix $W_{\beta2}$ is obtained based on $H_{\beta2}$, if there is a stronger correlation between $W\_PMI'_{UE}$ and $W_{\beta1}$, for example, $\|W_{\beta1} W\_PMI'_{UE}\|$ is greater than $\|W_{\beta2} W\_PMI'_{UE}\|$, it is considered that $\beta1$ is closer to $\Delta\theta$, $\alpha1$ is closer to $\Delta A$;

Manner 3, $PMI_{\beta1}$ and $PMI_{\beta2}$ are respectively obtained based on $H_{\beta1}$ and $H_{\beta2}$, if $PMI_{\beta1} = PMI_{UE}$, it is considered that $\beta1$ is closer to $\Delta\theta$. $\alpha1$ is closer to $\Delta A$;

Manner 4, a plurality of $PMI_{\beta1}$ and $PMI_{\beta2}$ are respectively obtained based on a plurality of $H_{\beta1}$ and $H_{\beta2}$ of frequency domain and/or time domain, and statistics is collected for N times. If the number of times n1 where $PMI_{\beta1} = PMI_{UE}$ is true is greater than the number of times n2 where $PMI_{\beta2} = PMI_{UE}$ is true, it is considered that $\beta1$ is closer to $\Delta\theta$, $\alpha1$ is closer to $\Delta A$;

Manner 5, a set $\{PMI_{\beta1}(1),PMI_{\beta1}(2), ...,PMI_{\beta1}(k1)....\}$ of $PMI_{\beta1}$, which ranking from high to low according to the priority is obtained based on $H_{\beta1}$, a set $\{PMI_{\beta2}(1),PMI_{\beta2}(2), ...,PMI_{\beta2}(k2),...\}$ of $PMI_{\beta2}$, which ranking from high to low according to the priority is obtained based on $H_{\beta2}$, it is assumed that $PMI_{\beta1}(k1) = PMI_{UE}$, and $PMI_{\beta2}(k2) = PMI_{UE}$, if k1 is less than k2, it is considered that $\beta1$ is closer to $\Delta\theta$, $\alpha1$ is closer to $\Delta A$. The above ranking from high to low according to the priority refers to that according to the PMI measurement and selection principle, the higher the priority is, the better the precoding matrix corresponding to the PMI is;

Manner 6, a plurality of $PMI_{\beta1}$ and $PMI_{\beta2}$ are respectively obtained based on a plurality of $H_{\beta1}$ and $H_{\beta2}$ of frequency domain and/or time domain. A set $\{PMI_{\beta1}(1),PMI_{\beta1}(2), ...,PMI_{\beta1}(k1),...\}$ of $PMI_{\beta1}$, which ranking from high to low according to the priority is obtained based on $H_{\beta1}(i)$, a set $\{PMI_{\beta2}(1),PMI_{\beta1}(2), ...,PMI_{\beta2}(k2),...\}$ of $PMI_{\beta2}$, which ranking from high to low according to the priority is obtained based on $H_{\beta2}(i)$, it is assumed that $PMI_{\beta1}(k1) = PMI_{UE}$,

and $PMI_{\beta2}(k2) = PMI_{UE}$. The statistics is collected for N times, if $\sum_{i=1}^{N} k2(i) > \sum_{i=1}^{N} k1(i)$, it is considered that $\beta1$ is closer to $\Delta\theta$ and $\alpha2$ is closer to $\Delta A$. The above ranking from high to low according to the priority refers to that according to the PMI measurement and selection principle, the higher the priority is, the better the precoding matrix corresponding to the PMI is;

Manner 7, because the deviation between RRU1 and RRU2 is a system deviation, that is, as long as meeting the UE selection condition of the above-mentioned step (2), a plurality of UEs can be selected at the same time. A plurality of UEs can be measured and estimated at the same time in the above-mentioned schemes so as to obtain a better estimation result.

Scheme 2:

On the basis of scheme 1, scheme 2 provides a more detailed method for calibrating multiple access points, wherein PMI in the precoding information is adopted to perform the calibration of multiple access points.

(a) The UE is configured to feed back PMI under a transmission mode 7 and a transmission mode 8. The PMI is measured and acquired by the UE on the basis of the CRS of multiple RRUs/access points in one and the same cell.

(b) The UE selection condition may be: based on channel fading, selecting a UE which can receive stronger signals from two target RRUs and weaker signals from other RRUs. The RRU with weak signals has less influence to the UE when calculating PMI.

(c) It is assumed that there are two RRUs in a cell, the number of CRS ports is 2

(1) Two RRUs are configured to repeatedly send CRS ports Port0 and Port1. A channel obtained by the UE on the basis of the two ports of the CRS is the synthesis channel $H_{CRS} = H_{RRU1} + H_{RRU2}$ acquired by the CRS sent by the two RRUs. It is also suitable for other CRS port mapping manners; however, the expression of $H_{CRS}$ needs to be changed correspondingly.

(2) The UE measures to obtain $PMI_{UE}$ on the basis of $H_{CRS}$ and feeds it back to the cell;

(3) The cell obtains uplink channels $H_{SRS_{RRU_1}}$ and $H_{SRS_{RRU_2}}$ corresponding to the two RRUs respectively on the basis of the uplink SRS. Corresponding downlink channels $H'_{SRS_{RRU_1}}$ and $H'_{SRS_{RRU_2}}$ are obtained by using the channel reciprocity. It is assumed that $H_{RRU1} = A_1 e^{j\theta_1} H'_{SRS_{RRU_1}}$, and $H_{RRU2} = A_2 e^{j\theta_2} H'_{SRS_{RRU_2}}$. Then the equivalent synthesized channel is:

$$H_{CRS} = A_1 e^{j\theta_1} H'_{SRS_{RRU_1}} + A_2 e^{j\theta_2} H'_{SRS_{RRU_2}}$$

$$= A_1 e^{j\theta_1} (H'_{SRS_{RRU_1}} + \frac{A_2}{A_1} e^{j(\theta_2 - \theta_1)} H'_{SRS_{RRU_2}})$$

(4) Because the coefficient $A_1 e^{j\theta_1}$ does not affect the calculation of PMI, we only consider the coefficient $\frac{A_2}{A_2} e^{j(\theta_2 - \theta_1)}$. It is assumed that $\Delta\theta = \theta_2 - \theta_1$, and $\Delta A = \frac{A_2}{A_1}$.

Method 1: The estimation correction is only performed for phase $\Delta\theta$, it is supposed that $\Delta\mathbf{A}$ has no influence, that is, it is supposed that $\Delta\mathbf{A} = \mathbf{1}$.

$\beta$ is searched or evaluated, so that $\beta$ is approximately equal to $\Delta\theta$ in a permitted error range.

It is assumed that $H_{\beta 1} = H'_{SRS_{RRU_1}} + e^{j\beta 1} H'_{SRS_{RRU_2}}$, and $H_{\beta 2} = H'_{SRS_{RRU_1}} + e^{j\beta 2} H'_{SRS_{RRU_2}}$, $\beta 1$ and $\beta 2$ belong to the value range of the estimated phase difference $\Delta\theta$.

The phase estimation judgement is achieved by using the following one manner or the combination of multiple manners, and the phase difference $\Delta\theta$ is finally estimated through multiple iteration traversals:

Manner 1, it is assumed that $PMI_{UE}$ corresponds to precoding matrix $W\_PMI'_{UE}$, if there is stronger correlation between $W\_PMI'_{UE}$ and $H_{\beta 1}$, for example, $\|H_{\beta 1} W\_PMI'_{UE}\|$ is greater than $\|H_{\beta 2} W\_PMI'_{UE}\|$, it is considered that $\beta 1$ is closer to $\Delta\theta$;

Manner 2, it is assumed that $PMI_{UE}$ corresponds to precoding matrix $W\_PMI'_{UE}$. A precoding matrix $W_{\beta 1}$ is obtained based on $H_{\beta 1}$, a precoding matrix $W_{\beta 2}$ is obtained based on $H_{\beta 2}$, if there is a stronger correlation between $W\_PMI'_{UE}$ and $W_{\beta 1}$, for example, $\|W_{\beta 1} W\_PMI'_{UE}\|$ is greater than $\|W_{\beta 2} W\_PMI'_{UE}\|$, it is considered that $\beta 1$ is closer to $\Delta\theta$;

Manner 3, $PMI_{\beta 1}$ and $PMI_{\beta 2}$ are respectively obtained based on $H_{\beta 1}$ and $H_{\beta 2}$, if $PMI_{\beta 1} = PMI_{UE}$. it is considered that $\beta 1$ is closer to $\Delta\theta$;

Manner 4, a plurality of $PMI_{\beta 1}$ and $PMI_{\beta 2}$ are respectively obtained based on a plurality of $H_{\beta 1}$ and $H_{\beta 2}$ of frequency domain and/or time domain, and statistics is collected for N times. If the number of times n1 where $PMI_{\beta 1} = PMI_{UE}$ is true is greater than the number of times n2 where $PMI_{\beta 2} = PMI_{UE}$ is true, it is considered that $\beta 1$ is closer to $\Delta\theta$;

Manner 5, a set $\{PMI_{\beta 1}(1), PMI_{\beta 1}(2), ...., PMI_{\beta 1}(k1),...\}$ of $PMI_{\beta 1}$, which ranking from high to low according to the priority, is obtained based on $H_{\beta 1}$, a set $\{PMI_{\beta 2}(1), PMI_{\beta 2}(2), ..., PMI_{\beta 2}(k2),...\}$ of $PMI_{\beta 2}$, which ranking from high to low according to the priority is obtained based on $H_{\beta 2}$, it is assumed that $PMI_{\beta 1}(k1) = PMI_{UE}$, and $PMI_{\beta 2}(k2) = PMI_{UE}$. if k1 is less than k2, it is considered that $\beta 1$ is closer to $\Delta\theta$. The above ranking from high to low according to the priority refers to that according to the PMI measurement and selection principle, the higher the priority is, the better the precoding matrix corresponding to the PMI is;

Manner 6, a plurality of $PMI_{\beta 1}$ and $PMI_{\beta 2}$ are respectively obtained based on a plurality of $H_{\beta 1}$ and $H_{\beta 2}$ of frequency domain and/or time domain. A set $\{PMI_{\beta 1}(1), PMI_{\beta 1}(2), ..., PMI_{\beta 1}(k1)....\}$ of $PMI_{\beta 1}$, which ranking from high to low according to the priority is obtained based on $H_{\beta 1}(i)$, a set $\{PMI_{\beta 2}(1), PMI_{\beta 2}(2), ...., PMI_{\beta 2}(k2),...]$ of $PMI_{\beta 2}$, which ranking from high to low according to the priority is obtained based on $H_{\beta 2}(i)$, it is assumed that $PMI_{\beta 1}(k1) = PMI_{UE}$, and $PMI_{\beta 2}(k2) = PMI_{UE}$. The statistics is collected for N times, if $\sum_{i=1}^{N} k2(i) > \sum_{i=1}^{N} k1(i)$, it is considered that $\beta 1$ is closer to $\Delta\theta$. The above ranking from high to low according to the priority refers to that according to the PMI measurement and selection principle, the higher the priority is, the better the precoding matrix corresponding to the PMI is.

Because the deviation between RRU1 and RRU2 is a system deviation, that is, as long as meeting the UE selection condition of the above-mentioned step (2), a plurality of UEs can be selected at the same time. A plurality of UEs can be measured and estimated at the same time in the above-mentioned schemes so as to obtain a better estimation result.

Method 2: estimation is performed for the phase $\Delta\theta$ and the amplitude $\Delta\mathbf{A}$ at the same time

A phase estimation value $\beta$ is obtained by estimation, and the phase $\Delta\theta$ is corrected separately; or, an amplitude estimation value $\alpha$ is obtained by estimation, and the amplitude $\Delta\mathbf{A}$ is corrected separately; or, a phase estimation value $\beta$ and an amplitude estimation value $\alpha$ are obtained by estimation, and the phase $\Delta\theta$ and the amplitude $\Delta\mathbf{A}$ are corrected at the same time.

$\beta$ and $\alpha$ are searched or evaluated, so that $\beta$ is approximately equal to $\Delta\theta$ in a permitted error range and at the same time, $\alpha$ is approximately equal to $\Delta\mathbf{A}$ in a permitted error range. Preferably, the QAM constellation point mapping rule can be adopted to select the combination of traversal amplitude and phase at the same time.

It is assumed that $H_{\beta 1} = H'_{SRS_{RRU_1}} + \alpha 1 e^{j\beta 1} H'_{SRS_{RRU_2}}$, and $H_{\beta 2} = H'_{SRS_{RRU_1}} + \alpha 2 e^{j\beta 2} H'_{SRS_{RRU_2}}$, $\beta 1$ and $\beta 2$ belong to the value range of the estimated phase difference $\Delta\theta$, and $\alpha 1$ and $\alpha 2$ belong to the value range of the estimated amplitude difference $\Delta A$. The phase estimation judgement is achieved by using the following one manner or the combination of multiple manners, and the phase difference $\Delta\theta$ and the amplitude difference $\Delta\mathbf{A}$ are finally estimated through multiple iteration traversals:

Manner 1, it is assumed that $PMI_{UE}$ corresponds to precoding matrix $W\_PMI'_{UE}$, if there is stronger correlation between $W\_PMI'_{UE}$ and $H_{\beta 1}$, for example, $\|H_{\beta 1} W\_PMI'_{UE}\|$ is greater than $\|H_{\beta 2} W\_PMI'_{UE}\|$, it is considered that $\beta 1$ is closer to $\Delta\theta$, and $\alpha 1$ is closer to $\Delta A$;

Manner 2, it is assumed that $PMI_{UE}$ corresponds to precoding matrix $W\_PMI'_{UE}$. A precoding matrix $W_{\beta 1}$ is obtained based on $H_{\beta 1}$, a precoding matrix $W_{\beta 2}$ is obtained based on $H_{\beta 2}$, if there is a stronger correlation between $W\_PMI'_{UE}$ and $W_{\beta 1}$, for example, $\|W_{\beta 1} W\_PMI'_{UE}\|$ is greater than $\|W_{\beta 2} W\_PMI'_{UE}\|$, it is considered that $\beta 1$ is closer to $\Delta\theta$, $\alpha 1$ is closer to $\Delta A$;

Manner 3, $PMI_{\beta 1}$ and $PMI_{\beta 2}$ are respectively obtained based on $H_{\beta 1}$ and $H_{\beta 2}$, if $PMI_{\beta 1} = PMI_{UE}$, it is considered that $\beta 1$ is closer to $\Delta\theta$, $\alpha 1$ is closer to $\Delta A$;

Manner 4, a plurality of $PMI_{\beta 1}$ and $PMI_{\beta 2}$ are respectively obtained based on a plurality of $H_{\beta 1}$ and $H_{\beta 2}$ of frequency

domain and/or time domain, and the statistics is collected for N times. If the number of times n1 where $PMI_{\beta1}$ = $PMI_{UE}$ is true is greater than the number of times n2 where $PMI_{\beta2}$ = $PMI_{UE}$ is true, it is considered that $\beta1$ is closer to $\Delta\theta$, $\alpha1$ is closer to $\Delta A$;

Manner 5, a set $\{PMI_{\beta1}(1),PMI_{\beta1}(2), ...,PMI_{\beta1}(k1),...\}$ of $PMI_{\beta1}$, which ranking from high to low according to the priority is obtained based on $H_{\beta1}$, a set $\{PMI_{\beta2}(1),PMI_{\beta2}(2), ...,PMI_{\beta2}(k2),...\}$ of $PMI_{\beta2}$, which ranking from high to low according to the priority is obtained based on $H_{\beta2}$, it is assumed that $PMI_{\beta1}(k1)$ = $PMI_{UE}$, and $PMI_{\beta2}(k2)$ = $PMI_{UE}$, if k1 is less than k2, it is considered that $\beta1$ is closer to $\Delta\theta$, $\alpha1$ is closer to $\Delta A$. The above ranking from high to low according to the priority refers to that according to the PMI measurement and selection principle, the higher the priority is, the better the precoding matrix corresponding to the PMI is;

Manner 6, a plurality of $PMI_{\beta1}$ and $PMI_{\beta2}$ are respectively obtained based on a plurality of $H_{\beta1}$ and $H_{\beta2}$ of frequency domain and/or time domain. A set $\{PMI_{\beta1}(1),PMI_{\beta1}(2), ...,PMI_{\beta1}(k1),...\}$ of $PMI_{\beta1}$, which ranking from high to low according to the priority is obtained based on $H_{\beta1}(i)$, a set $\{PMI_{\beta2}(1),PMI_{\beta2}(2), ...,PMI_{\beta2}(k2),...\}$ of $PMI_{\beta2}$, which ranking from high to low according to the priority is obtained based on $H_{\beta2}(i)$, it is assumed that $PMI_{\beta1}(k1)$ = $PMI_{UE}$,

and $PMI_{\beta2}(k2)$ = $PMI_{UE}$, The statistics is collected for N times, if $\sum_{i=1}^{N} k2(i) > \sum_{i=1}^{N} k1(i)$, it is considered that $\beta1$ is closer to $\Delta\theta$, $\alpha2$ is closer to $\Delta A$. The above ranking from high to low according to the priority refers to that according to the PMI measurement and selection principle, the higher the priority is, the better the precoding matrix corresponding to the PMI is.

Manner 7, because the deviation between RRU1 and RRU2 is a system deviation, that is, as long as meeting the UE selection condition of the above-mentioned step (2), a plurality of UEs can be selected at the same time. A plurality of UEs can be measured and estimated at the same time in the above-mentioned schemes so as to obtain a better estimation result.

The above-mentioned precoding vector may be selected from a pre-defined codebook collection, that is, selecting a corresponding precoding matrix indicator (PMI), and the PMI is fed back to indicate the corresponding precoding vector thereof. A codebook collection for feeding back multi-input-multi-output (MIMO) on the basis of codebook can be reused to serve as the codebook collection in the embodiment.

Step 3, the parameters for sending signals by each RRU are adjusted on the basis of the reciprocity error between the uplink channel and the downlink channel calculated by each RRU/access point.

It should be noted that the steps shown in the flowchart of the drawings can be executed, for example, in a computer system with a set of instructions executable by a computer, in addition, a logic order is shown in the flowchart, but the shown or described steps can be executed in a different order under some conditions.

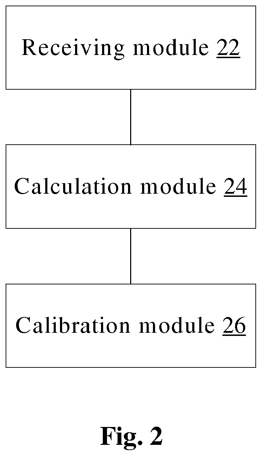

An embodiment of the present invention provides an apparatus for calibrating multiple access points, the apparatus for calibrating multiple access points can be used for realizing the above-mentioned method for calibrating multiple access points. Fig. 2 is a block diagram of an apparatus for calibrating multiple access points according to an embodiment of the present invention, as shown in Fig. 2, including a receiving module **22,** a calculation module **24** and a calibration module **26.**

a receiving module **22,** configured to receive at least one parameter of at least one downlink channel fed back by user equipment (UE); a calculation module **24** coupled with the receiving module **22** and configured to calculate at least one parameter difference between at least one uplink channel and the at least one downlink channel according to the at least one parameter of the at least one downlink channel received by the receiving module **22;** and a calibration module **26** coupled with the calculation module **24** and configured to calibrate multiple access points according to the at least one parameter difference calculated by the calculation module **24.**

To sum up, according to the above-mentioned embodiments of the present invention, a method and apparatus for calibrating multiple access points are provided. Through the embodiments of the present invention, the cell accurately calculates the at least one parameter difference among different access points, then multi-access point is calibrated according to the at least one parameter difference so as to guarantee the desirable coherent transmission between access points so as to ensure system performance.

Industrial Applicability

The technical solution of the present invention has industrial applicability. According to the embodiments of the present invention, the cell accurately calculates the at least one parameter difference among different access points, then multiple access points are calibrated according to the at least one parameter difference so as to guarantee the desirable coherent transmission between access points so as to ensure system performance.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

**Claims**

1.    A method for calibrating multiple access points, comprising:

a cell receiving at least one parameter of at least one downlink channel of multiple access points, wherein the at least one parameter is fed back by user equipment ,UE, and comprises one of the following: time, phase, amplitude, time as well as amplitude, and phase as well as amplitude (S102);
calculating at least one parameter difference between at least one uplink channel and the at least one downlink channel of the multiple access points according to the at least one parameter of the at least one downlink channel (S104); and
calibrating the multiple access points according to the at least one parameter difference (S106);
wherein before the cell receives the at least one parameter of the at least one downlink channel fed back by the UE, the method further comprises: the cell configuring the UE to measure the at least one downlink channel;
wherein the cell configuring the UE to measure the at least one downlink channel comprises: under the condition that the multiple access points have performed self-calibration, the cell configuring the UE to measure at least one downlink channel of at least one antenna port in all the antenna ports of each access point in the multiple access points;
wherein calculating the at least one parameter difference between the at least one uplink channel and the at least one downlink channel according to the at least one parameter of the at least one downlink channel comprises:

the cell measuring at least one parameter of at least one uplink channel of the at least one antenna port of the each access point; and
the cell calculating the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point;
wherein the cell calculating the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point comprises:

under the condition that the UE feeds back the at least one parameter of the at least one downlink channel of the at least one antenna port in form of a codebook, the cell transposing at least one uplink channel matrix used for indicating the at least one parameter of the at least one uplink channel of the at least one antenna port of the each access point to obtain at least one equivalent downlink channel matrix;
the cell calculating a qualified codebook based on the at least one equivalent downlink channel matrix;
the cell comparing the codebook fed back by the UE with the codebook calculated by the cell based on the at least one equivalent downlink channel matrix; and
the cell calculating the at least one parameter difference between the at least one uplink channel and the at least one downlink channel according to the comparison result.

2.    The method according to claim 1, **characterized in that** the cell configuring the UE to measure the at least one downlink channel comprises: under the condition that the multiple access points have not performed self-calibration, the cell configuring the UE to measure downlink channels of all antenna ports.

3.    The method according to claim 2, **characterized in that** the cell receiving the at least one parameter of the at least one downlink channel fed back by the UE comprises: the cell receiving parameters of the downlink channels of all the antenna ports, wherein the parameters are fed back by the UE through one of the following manners: in form of a codebook, feeding back downlink channel matrices, and feeding back main characteristic information of the downlink channel matrices.

4.  The method according to claim 2, **characterized in that** calculating the at least one parameter difference between the at least one uplink channel and the at least one downlink channel according to the at least one parameter of the at least one downlink channel comprises:

    the cell measuring parameters of uplink channels of all the antenna ports; and
    the cell calculating parameter differences between the uplink channels and the downlink channels according to the parameters of the uplink channels of all the antenna ports and the parameters of the downlink channels of all the antenna ports.

5.  The method according to claim 1, **characterized in that** the cell receiving the at least one parameter of the at least one downlink channel fed back by the UE comprises: under the condition that the cell configures the UE to measure at least one downlink channel of one antenna port in all the antenna ports of the each access point, the cell receiving at least one parameter of the at least one downlink channel of the antenna port, fed back by means of one of the following manners by the UE: feeding back at least one downlink channel matrix, feeding back main characteristic information of the at least one downlink channel matrix, and feeding back at least one phase of at least one downlink channel of a single port.

6.  The method according to claim 1, **characterized in that** the cell measuring the at least one parameter of the at least one uplink channel of the at least one antenna port of the each access point comprises:

    the cell using a signal sent at a time point adjacent to sending of a downlink signal of a downlink channel as an uplink signal of an uplink channel; and
    the cell measuring the uplink signal to obtain the at least one parameter of the at least one uplink channel of the at least one antenna port of the each access point.

7.  The method according to claim 1, **characterized in that** the cell measuring the at least one parameter of the at least one uplink channel of the at least one antenna port of the each access point comprises: the cell measuring the at least one parameter of the at least one uplink channel of the at least one antenna port of the each access point with respect to one and the same UE at the same time.

8.  The method according to claim 1, **characterized in that** the cell measuring the at least one parameter of the at least one uplink channel of the at least one antenna port of the each access point comprises: methods for respective access points to process the at least one uplink channel being the same.

9.  The method according to claim 1, **characterized in that** the cell calculating the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point further comprises:

    under the condition that the UE feeds back the at least one parameter of the at least one downlink channel of the at least one antenna port by feeding back the at least one downlink channel matrix or feeding back the main characteristic information of the at least one downlink channel matrix, the cell transposing at least one uplink channel matrix used for indicating the at least one parameter of the at least one uplink channel of the at least one antenna port of the each access point to obtain at least one equivalent downlink channel matrix;
    the cell comparing the at least one equivalent downlink channel matrix with the at least one downlink channel matrix fed back by the UE; and
    the cell calculating the at least one parameter difference between the at least one uplink channel and the at least one downlink channel according to a comparison result.

10. The method according to claim 1, **characterized in that** the cell calculating the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point further comprises: the cell only calculating a parameter difference between one uplink channel and one downlink channel for each access point.

11. The method according to claim 1, **characterized in that** the cell configuring the UE to measure the at least one downlink channel comprises: under the condition that the multiple access points have performed self-calibration, the cell configuring the UE to measure at least one downlink channel of at least one antenna port in all the antenna ports of the multiple access points.

12. The method according to claim 11, **characterized in that** the cell configuring the UE to measure the at least one downlink channel of the at least one antenna port in all the antenna ports of the multiple access points comprises: the cell configuring the UE to measure precoding information, wherein the precoding information is calculated by the UE according to at least one channel between the UE and the multiple access points, and the at least one channel is obtained by measuring according to at least one downlink reference signal sent by the multiple access points.

13. The method according to claim 12, **characterized in that** before calculating the at least one parameter difference between the at least one uplink channel and the at least one downlink channel of the multiple access points according to the at least one parameter of the at least one downlink channel, the method further comprises:

the cell obtaining at least one parameter of at least one uplink channel between the UE and the multiple access points according to at least one uplink reference signal; and
the cell obtaining at least one parameter of at least one downlink channel according to the at least one uplink channel and making use of channel reciprocity.

14. The method according to claim 13, **characterized in that** the cell obtaining the parameter of the uplink channel between the UE and the multiple access points according to an uplink reference signal comprises: calculating the parameter difference between the uplink channel and the downlink channel of the multiple access points according to the downlink channel parameter obtained by the precoding information and making use of channel reciprocity.

15. The method according to any one of claims 12-14, **characterized in that** calculating the at least one parameter difference between the at least one uplink channel and the at least one downlink channel of the multiple access points according to the at least one parameter of the at least one downlink channel comprises:

step A, selecting a first parameter difference and a second parameter difference in a possible parameter difference range to respectively obtain a first corrected downlink channel corresponding to the first parameter difference and a second corrected downlink channel corresponding to the second parameter difference;
step B, based on the precoding information, determining, in the first corrected downlink channel and the second corrected downlink channel, that the first corrected downlink channel is closer to a real downlink channel;
step C, determining the first parameter difference to serve as a calculated parameter difference; and

iterating the step A to the step C to obtain the calculated parameter difference.

16. The method according to claim 12, **characterized in that** the cell configuring the UE to measure the precoding information comprises: the cell configuring the UE to measure precoding matrix indicator ,PMI, wherein the PMI is calculated by the UE according to at least one channel between the UE and the multiple access points in the same cell, and the at least one channel is obtained by measuring according to at least one cell specific reference signal ,CRS, sent by the multiple access points.

17. The method according to claim 16, **characterized in that** before calculating the at least one parameter difference between the at least one uplink channel and the at least one downlink channel of the multiple access points according to the at least one parameter of the at least one downlink channel, the method further comprises:

the cell obtaining at least one parameter of at least one uplink channel between the UE and the multiple access points according to at least one uplink sounding reference signal, SRS; and
the cell obtaining at least one parameter of the at least one downlink channel according to the at least one uplink channel and making use of channel reciprocity.

**18.** The method according to claim 17, **characterized in that** calculating the at least one parameter difference between the at least one uplink channel and the at least one downlink channel of the multiple access points according to the at least one parameter of the at least one downlink channel comprises: calculating the at least one parameter difference between the at least one uplink channel and the at least one downlink channel of the multiple access points according to the PMI and the at least one parameter of the at least one downlink channel obtained by making use of the channel reciprocity.

**19.** The method according to any one of claims 16-18, **characterized in that** calculating the at least one parameter difference between the at least one uplink channel and the at least one downlink channel of the multiple access points according to the at least one parameter of the at least one downlink channel comprises:

> step A, selecting a first parameter difference and a second parameter difference in a possible parameter difference range to respectively obtain a first corrected downlink channel corresponding to the first parameter difference and a second corrected downlink channel corresponding to the second parameter difference;
> step B, based on the PMI, determining, in the first corrected downlink channel and the second corrected downlink channel, that the first corrected downlink channel is closer to a real downlink channel;
> step C, determining the first parameter difference to serve as the calculated parameter difference; and

> iterating the step A to the step C to obtain the calculated parameter difference.

**20.** An apparatus for calibrating multiple access points, comprising:

> a receiving module (22), configured to receive at least one parameter of at least one downlink channel fed back by user equipment, UE;
> a calculation module (24), configured to calculate at least one parameter difference between at least one uplink channel and the at least one downlink channel according to the at least one parameter of the at least one downlink channel; and
> a calibration module (26), configured to calibrate multiple access points according to the at least one parameter difference;
> wherein before the receiving module receives the at least one parameter of the at least one downlink channel fed back by the UE, the apparatus configures the UE to measure the at least one downlink channel;
> wherein the apparatus configures the UE to measure the at least one downlink channel comprises: under the condition that the multiple access points have performed self-calibration, the apparatus configures the UE to measure at least one downlink channel of at least one antenna port in all the antenna ports of each access point in the multiple access points;
> wherein the calculation module configured to calculate the at least one parameter difference between the at least one uplink channel and the at least one downlink channel according to the at least one parameter of the at least one downlink channel comprises: the calculation module measures at least one parameter of at least one uplink channel of the at least one antenna port of the each access point; and calculates the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point;
> wherein the calculation module calculates the at least one parameter difference between the at least one uplink channel and the at least one downlink channel according to the at least one parameter of the at least one uplink channel of the at least one antenna port of the each access point and the at least one parameter of the at least one downlink channel of the at least one antenna port of the each access point comprises: under the condition that the UE feeds back the at least one parameter of the at least one downlink channel of the at least one antenna port in form of a codebook, the calculation module transposes at least one uplink channel matrix used for indicating the at least one parameter of the at least one uplink channel of the at least one antenna port of the each access point to obtain at least one equivalent downlink channel matrix; the calculation module calculates a qualified codebook based on the at least one equivalent downlink channel matrix; the calculation module comparing the codebook fed back by the UE with the codebook calculated by the calculation module based on the at least one equivalent downlink channel matrix; and the calculation module calculates the at least one parameter difference between the at least one uplink channel and the at least one downlink channel according to the comparison result.

**Patentansprüche**

1. Verfahren zum Kalibrieren von mehreren Zugangspunkten, umfassend:

   eine Zelle, die wenigstens einen Parameter von wenigstens einem Downlink-Kanal von mehreren Zugangspunkten empfängt, wobei der wenigstens eine Parameter durch Benutzerausrüstung, UE (von engl. user equipment), zurückgeleitet wird und eines von Folgendem umfasst: Zeit, Phase, Amplitude, Zeit und Amplitude und Phase und Amplitude (S102);
   Berechnen von wenigstens einem Parameterunterschied zwischen wenigstens einem Uplink-Kanal und dem wenigstens einen Downlink-Kanal der mehreren Zugangspunkte gemäß dem wenigstens einen Parameter des wenigstens einen Downlink-Kanals (S104); und
   Kalibrieren der mehreren Zugangspunkte gemäß dem wenigstens einen Parameterunterschied (S106);
   wobei das Verfahren, bevor die Zelle den wenigstens einen durch die UE zurückgeleiteten Parameter des wenigstens einen Downlink-Kanals empfängt, ferner umfasst: Konfigurieren, durch die Zelle, der UE, um den wenigstens einen Downlink-Kanal zu messen;
   wobei das Konfigurieren, durch die Zelle, der UE, um den wenigstens einen Downlink-Kanal zu messen, Folgendes umfasst: unter der Bedingung, dass die mehreren Zugangspunkte eine Selbstkalibrierung durchgeführt haben, Konfigurieren, durch die Zelle, der UE, um wenigstens einen Downlink-Kanal von wenigstens einem Antennenanschluss bei allen Antennenanschlüssen von jedem Zugangspunkt bei den mehreren Zugangspunkten zu messen;
   wobei das Berechnen des wenigstens einen Parameterunterschieds zwischen dem wenigstens einen Uplink-Kanal und dem wenigstens einen Downlink-Kanal gemäß dem wenigstens einen Parameter des wenigstens einen Downlink-Kanals Folgendes umfasst:

   Messen, durch die Zelle, von wenigstens einem Parameter von wenigstens einem Uplink-Kanal des wenigstens einen Antennenanschlusses von jedem Zugangspunkt; und
   Berechnen, durch die Zelle, des wenigstens einen Parameterunterschieds zwischen dem wenigstens einen Uplink-Kanal und dem wenigstens einen Downlink-Kanal gemäß dem wenigstens einen Parameter des wenigstens einen Uplink-Kanals des wenigstens einen Antennenanschlusses von jedem Zugangspunkt und dem wenigstens einen Parameter des wenigstens einen Downlink-Kanals des wenigstens einen Antennenanschlusses von jedem Zugangspunkt;
   wobei das Berechnen, durch die Zelle, des wenigstens einen Parameterunterschieds zwischen dem wenigstens einen Uplink-Kanal und dem wenigstens einen Downlink-Kanal gemäß dem wenigstens einen Parameter des wenigstens einen Uplink-Kanals des wenigstens einen Antennenanschlusses von jedem Zugangspunkt und dem wenigstens einen Parameter des wenigstens einen Downlink-Kanals des wenigstens einen Antennenanschlusses von jedem Zugangspunkt Folgendes umfasst:

      unter der Bedingung, dass die Benutzerausrüstung den wenigstens einen Parameter des wenigstens einen Downlink-Kanals des wenigstens einen Antennenanschlusses in Form eines Codebuchs zurückleitet, Transponieren, durch die Zelle, von wenigstens einer Uplink-Kanal-Matrix, die zum Anzeigen des wenigstens einen Parameters des wenigstens einen Uplink-Kanals des wenigstens einen Antennenanschlusses von jedem Zugangspunkt verwendet wird, um wenigstens eine äquivalente Downlink-Kanal-Matrix zu erhalten;
      Berechnen, durch die Zelle, eines qualifizierten Codebuchs basierend auf der wenigstens einen äquivalenten Downlink-Kanal-Matrix;
      Vergleichen, durch die Zelle, des durch die UE zurückgeleiteten Codebuchs mit dem Codebuch, das durch die Zelle basierend auf der wenigstens einen äquivalenten Downlink-Kanal-Matrix berechnet wurde; und
      Berechnen, durch die Zelle, des wenigstens einen Parameterunterschieds zwischen dem wenigstens einen Uplink-Kanal und dem wenigstens einen Downlink-Kanal gemäß dem Vergleichsergebnis.

2. Verfahren nach Anspruch 1, **dadurch gekennzeichnet, dass** das Konfigurieren, durch die Zelle, der UE, um den wenigstens einen Downlink-Kanal zu messen, Folgendes umfasst: unter der Bedingung, dass die mehreren Zugangspunkte keine Selbstkalibrierung durchgeführt haben, Konfigurieren, durch die Zelle, der UE, um Downlink-Kanäle von allen Antennenanschlüssen zu messen.

3. Verfahren nach Anspruch 2, **dadurch gekennzeichnet, dass** das Empfangen, durch die Zelle, des wenigstens einen durch die UE zurückgeleiteten Parameters des wenigstens einen Downlink-Kanals Folgendes umfasst: Empfangen, durch die Zelle, von Parametern der Downlink-Kanäle von allen Antennenanschlüssen, wobei die Parameter durch die UE auf eine der folgenden Weisen zurückgeleitet werden: in Form eines Codebuchs, durch Zurückleiten von Downlink-Kanal-Matrizen und durch Zurückleiten von Haupteigenschaftsinformationen der Downlink-Kanal-Matrizen.

4. Verfahren nach Anspruch 2, **dadurch gekennzeichnet, dass** das Berechnen des wenigstens einen Parameterunterschieds zwischen dem wenigstens einen Uplink-Kanal und dem wenigstens einen Downlink-Kanal gemäß dem wenigstens einen Parameter des wenigstens einen Downlink-Kanals Folgendes umfasst:

   Messen, durch die Zelle, von Parametern von Uplink-Kanälen von allen Antennenanschlüssen; und
   Berechnen, durch die Zelle, von Parameterunterschieden zwischen den Uplink-Kanälen und den Downlink-Kanälen gemäß den Parametern der Uplink-Kanäle von allen Antennenanschlüssen und den Parametern der Downlink-Kanäle von allen Antennenanschlüssen.

5. Verfahren nach Anspruch 1, **dadurch gekennzeichnet, dass** das Empfangen, durch die Zelle, des wenigstens einen durch die UE zurückgeleiteten Parameters des wenigstens einen Downlink-Kanals Folgendes umfasst: unter der Bedingung, dass die Zelle die UE konfiguriert, um wenigstens einen Downlink-Kanal von einem Antennenanschluss bei allen Antennenanschlüssen von jedem Zugangspunkt zu messen, Empfangen, durch die Zelle, von wenigstens einem Parameter des wenigstens einen Downlink-Kanals des Antennenanschlusses, der auf eine der folgenden Weisen durch die UE zurückgeleitet wurde: Zurückleiten von wenigstens einer Downlink-Kanal-Matrix, Zurückleiten von Haupteigenschaftsinformationen der wenigstens einen Downlink-Kanal-Matrix und Zurückleiten von wenigstens einer Phase von wenigstens einem Downlink-Kanal eines einzelnen Anschlusses.

6. Verfahren nach Anspruch 1, **dadurch gekennzeichnet, dass** das Messen, durch die Zelle, des wenigstens einen Parameters des wenigstens einen Uplink-Kanals des wenigstens einen Antennenanschlusses von jedem Zugangspunkt Folgendes umfasst: Verwenden, durch die Zelle, eines Signals, das zu einem Zeitpunkt gesendet wurde, der an das Senden eines Downlink-Signals eines Downlink-Kanals als ein Uplink-Signal eines Uplink-Kanals angrenzt; und
Messen, durch die Zelle, des Uplink-Signals, um den wenigstens einen Parameter des wenigstens einen Uplink-Kanals des wenigstens einen Antennenanschlusses von jedem Zugangspunkt zu erhalten.

7. Verfahren nach Anspruch 1, **dadurch gekennzeichnet, dass** das Messen, durch die Zelle, des wenigstens einen Parameters des wenigstens einen Uplink-Kanals des wenigstens einen Antennenanschlusses von jedem Zugangspunkt Folgendes umfasst: gleichzeitiges Messen, durch die Zelle, des wenigstens einen Parameters des wenigstens einen Uplink-Kanals des wenigstens einen Antennenanschlusses von jedem Zugangspunkt in Bezug auf ein und dieselbe UE.

8. Verfahren nach Anspruch 1, **dadurch gekennzeichnet, dass** das Messen, durch die Zelle, des wenigstens einen Parameters des wenigstens einen Uplink-Kanals des wenigstens einen Antennenanschlusses von jedem Zugangspunkt Folgendes umfasst: identische Verfahren für jeweilige Zugangspunkte zum Verarbeiten des wenigstens einen Uplink-Kanals.

9. Verfahren nach Anspruch 1, **dadurch gekennzeichnet, dass** das Berechnen, durch die Zelle, des wenigstens einen Parameterunterschieds zwischen dem wenigstens einen Uplink-Kanal und dem wenigstens einen Downlink-Kanal gemäß dem wenigstens einen Parameter des wenigstens einen Uplink-Kanals des wenigstens einen Antennenanschlusses von jedem Zugangspunkt und dem wenigstens einen Parameter des wenigstens einen Downlink-Kanals des wenigstens einen Antennenanschlusses von jedem Zugangspunkt ferner Folgendes umfasst:

   unter der Bedingung, dass die UE den wenigstens einen Parameter des wenigstens einen Downlink-Kanals des wenigstens einen Antennenanschlusses durch Zurückleiten der wenigstens einen Downlink-Kanal-Matrix oder Zurückleiten der Haupteigenschaftsinformationen der wenigstens einen Downlink-Kanal-Matrix zurückleitet, Transponieren, durch die Zelle, von wenigstens einer Uplink-Kanal-Matrix, die zum Anzeigen des wenigstens einen Parameters des wenigstens einen Uplink-Kanals des wenigstens einen Antennenanschlusses von jedem Zugangspunkt verwendet wird, um wenigstens eine äquivalente Downlink-Kanal-Matrix zu erhalten; Vergleichen, durch die Zelle, der wenigstens einen äquivalenten Downlink-Kanal-Matrix mit der wenigstens einen durch die UE zurückgeleiteten Downlink-Kanal-Matrix; und
   Berechnen, durch die Zelle, des wenigstens einen Parameterunterschieds zwischen dem wenigstens einen Uplink-Kanal und dem wenigstens einen Downlink-Kanal gemäß einem Vergleichsergebnis.

**10.** Verfahren nach Anspruch 1, **dadurch gekennzeichnet, dass** das Berechnen, durch die Zelle, des wenigstens einen Parameterunterschieds zwischen dem wenigstens einen Uplink-Kanal und dem wenigstens einen Downlink-Kanal gemäß dem wenigstens einen Parameter des wenigstens einen Uplink-Kanals des wenigstens einen Antennenanschlusses von jedem Zugangspunkt und dem wenigstens einen Parameter des wenigstens einen Downlink-Kanals des wenigstens einen Antennenanschlusses von jedem Zugangspunkt ferner Folgendes umfasst: Berechnen, durch die Zelle, von nur einem Parameterunterschied zwischen einem Uplink-Kanal und einem Downlink-Kanal für jeden Zugangspunkt.

**11.** Verfahren nach Anspruch 1, **dadurch gekennzeichnet, dass** das Konfigurieren, durch die Zelle, der UE, um den wenigstens einen Downlink-Kanal zu messen, Folgendes umfasst: unter der Bedingung, dass die mehreren Zugangspunkte eine Selbstkalibrierung durchgeführt haben, Konfigurieren, durch die Zelle, der UE, um wenigstens einen Downlink-Kanal von wenigstens einem Antennenanschluss bei allen Antennenanschlüssen der mehreren Zugangspunkte zu messen.

**12.** Verfahren nach Anspruch 11, **dadurch gekennzeichnet, dass** das Konfigurieren, durch die Zelle, der UE, um den wenigstens einen Downlink-Kanal des wenigstens einen Antennenanschlusses bei allen Antennenanschlüssen der mehreren Zugangspunkte zu messen, Folgendes umfasst: Konfigurieren, durch die Zelle, der UE, um Vorcodierungsinformationen zu messen, wobei die Vorcodierungsinformationen durch die UE gemäß wenigstens einem Kanal zwischen der UE und den mehreren Zugangspunkten berechnet werden und der wenigstens eine Kanal durch Messen gemäß wenigstens einem Downlink-Referenzsignal, das durch die mehreren Zugangspunkte gesendet wurde, erhalten wird.

**13.** Verfahren nach Anspruch 12, **dadurch gekennzeichnet, dass** vor dem Berechnen des wenigstens einen Parameterunterschieds zwischen dem wenigstens einen Uplink-Kanal und dem wenigstens einen Downlink-Kanal der mehreren Zugangspunkte gemäß dem wenigstens einen Parameter des wenigstens einen Downlink-Kanals das Verfahren ferner Folgendes umfasst:

Erhalten, durch die Zelle, von wenigstens einem Parameter von wenigstens einem Uplink-Kanal zwischen der UE und den mehreren Zugangspunkten gemäß wenigstens einem Uplink-Referenzsignal; und
Erhalten, durch die Zelle, von wenigstens einem Parameter von wenigstens einem Downlink-Kanal gemäß dem wenigstens einen Uplink-Kanal und Verwenden von Kanalreziprozität.

**14.** Verfahren nach Anspruch 13, **dadurch gekennzeichnet, dass** das Erhalten, durch die Zelle, des Parameters des Uplink-Kanals zwischen der UE und den mehreren Zugangspunkten gemäß einem Uplink-Referenzsignal Folgendes umfasst: Berechnen des Parameterunterschieds zwischen dem Uplink-Kanal und dem Downlink-Kanal der mehreren Zugangspunkte gemäß dem durch die Vorcodierungsinformationen erhaltenen Downlink-Kanal-Parameter und Verwenden von Kanalreziprozität.

**15.** Verfahren nach einem der Ansprüche 12-14, **dadurch gekennzeichnet, dass** das Berechnen des wenigstens einen Parameterunterschieds zwischen dem wenigstens einen Uplink-Kanal und dem wenigstens einen Downlink-Kanal der mehreren Zugangspunkte gemäß dem wenigstens einen Parameter des wenigstens einen Downlink-Kanals Folgendes umfasst:

Schritt A, Auswählen eines ersten Parameterunterschieds und eines zweiten Parameterunterschieds in einem möglichen Parameterunterschiedsbereich, um einen ersten korrigierten Downlink-Kanal entsprechend dem ersten Parameterunterschied beziehungsweise einen zweiten korrigierten Downlink-Kanal entsprechend dem zweiten Parameterunterschied zu erhalten;
Schritt B, basierend auf den Vorcodierungsinformationen, Bestimmen, bei dem ersten korrigierten Downlink-Kanal und dem zweiten korrigierten Downlink-Kanal, dass sich der erste korrigierte Downlink-Kanal näher an einem echten Downlink-Kanal befindet; Schritt C, Bestimmen des ersten Parameterunterschieds, um als ein berechneter Parameterunterschied zu dienen; und
Iterieren von Schritt A bis Schritt C, um den berechneten Parameterunterschied zu erhalten.

**16.** Verfahren nach Anspruch 12, **dadurch gekennzeichnet, dass** das Konfigurieren, durch die Zelle, der UE, um die Vorcodierungsinformationen zu messen, Folgendes umfasst: Konfigurieren, durch die Zelle, der UE, um den Vorcodierungsmatrixindikator, PMI (von engl. precoding matrix indicator), zu messen, wobei der PMI durch die UE gemäß wenigstens einem Kanal zwischen der UE und den mehreren Zugangspunkten in derselben Zelle berechnet wird und der wenigstens eine Kanal durch Messen gemäß wenigstens einem zellspezifischen Referenzsignal, CRS (von engl. cell specific reference signal), das durch die mehreren Zugangspunkte gesendet wurde, erhalten wird.

17. Verfahren nach Anspruch 16, **dadurch gekennzeichnet, dass** vor dem Berechnen des wenigstens einen Parameterunterschieds zwischen dem wenigstens einen Uplink-Kanal und dem wenigstens einen Downlink-Kanal der mehreren Zugangspunkte gemäß dem wenigstens einen Parameter des wenigstens einen Downlink-Kanals das Verfahren ferner Folgendes umfasst:

Erhalten, durch die Zelle, von wenigstens einem Parameter von wenigstens einem Uplink-Kanal zwischen der UE und den mehreren Zugangspunkten gemäß wenigstens einem Uplink-Tonreferenzsignal, SRS (von engl. sounding reference signal), und
Erhalten, durch die Zelle, von wenigstens einem Parameter des wenigstens einen Downlink-Kanals gemäß dem wenigstens einen Uplink-Kanal und Verwenden von Kanalreziprozität.

18. Verfahren nach Anspruch 17, **dadurch gekennzeichnet, dass** das Berechnen des wenigstens einen Parameterunterschieds zwischen dem wenigstens einen Uplink-Kanal und dem wenigstens einen Downlink-Kanal der mehreren Zugangspunkte gemäß dem wenigstens einen Parameter des wenigstens einen Downlink-Kanals Folgendes umfasst: Berechnen des wenigstens einen Parameterunterschieds zwischen dem wenigstens einen Uplink-Kanal und dem wenigstens einen Downlink-Kanal der mehreren Zugangspunkte gemäß dem PMI und dem wenigstens einen Parameter des wenigstens einen Downlink-Kanals, der durch Verwenden der Kanalreziprozität erhalten wurde.

19. Verfahren nach einem der Ansprüche 16-18, **dadurch gekennzeichnet, dass** das Berechnen des wenigstens einen Parameterunterschieds zwischen dem wenigstens einen Uplink-Kanal und dem wenigstens einen Downlink-Kanal der mehreren Zugangspunkte gemäß dem wenigstens einen Parameter des wenigstens einen Downlink-Kanals Folgendes umfasst:

Schritt A, Auswählen eines ersten Parameterunterschieds und eines zweiten Parameterunterschieds in einem möglichen Parameterunterschiedsbereich, um einen ersten korrigierten Downlink-Kanal entsprechend dem ersten Parameterunterschied beziehungsweise einen zweiten korrigierten Downlink-Kanal entsprechend dem zweiten Parameterunterschied zu erhalten;
Schritt B, basierend auf dem PMI, Bestimmen, bei dem ersten korrigierten Downlink-Kanal und dem zweiten korrigierten Downlink-Kanal, dass sich der erste korrigierte Downlink-Kanal näher an einem echten Downlink-Kanal befindet;
Schritt C, Bestimmen des ersten Parameterunterschieds, um als der berechnete Parameterunterschied zu dienen; und
Iterieren von Schritt A bis Schritt C, um den berechneten Parameterunterschied zu erhalten.

20. Gerät zum Kalibrieren von mehreren Zugangspunkten, umfassend:

ein Empfangsmodul (22), das dazu konfiguriert ist, wenigstens einen durch Benutzerausrüstung, UE, zurückgeleiteten Parameter von wenigstens einem Downlink-Kanal zu empfangen;
ein Berechnungsmodul (24), das dazu konfiguriert ist, wenigstens einen Parameterunterschied zwischen wenigstens einem Uplink-Kanal und dem wenigstens einen Downlink-Kanal gemäß dem wenigstens einen Parameter des wenigstens einen Downlink-Kanals zu berechnen; und
ein Kalibrierungsmodul (26), das dazu konfiguriert ist, mehrere Zugangspunkte gemäß dem wenigstens einen Parameterunterschied zu kalibrieren;
wobei, bevor das Empfangsmodul den wenigstens einen durch die UE zurückgeleiteten Parameter des wenigstens einen Downlink-Kanals empfängt, das Gerät die UE konfiguriert, um den wenigstens einen Downlink-Kanal zu messen;
wobei das Konfigurieren, durch das Gerät, der UE, um den wenigstens einen Downlink-Kanal zu messen, Folgendes umfasst: unter der Bedingung, dass die mehreren Zugangspunkte eine Selbstkalibrierung durchgeführt haben, Konfigurieren, durch das Gerät, der UE, um wenigstens einen Downlink-Kanal von wenigstens einem Antennenanschluss bei allen Antennenanschlüssen von jedem Zugangspunkt bei den mehreren Zugangspunkten zu messen;
wobei das Berechnungsmodul, das dazu konfiguriert ist, den wenigstens einen Parameterunterschied zwischen dem wenigstens einen Uplink-Kanal und dem wenigstens einen Downlink-Kanal gemäß dem wenigstens einen Parameter des wenigstens einen Downlink-Kanals zu berechnen, Folgendes umfasst: Messen, durch das Berechnungsmodul, von wenigstens einem Parameter von wenigstens einem Uplink-Kanal des wenigstens einen Antennenanschlusses von jedem Zugangspunkt und Berechnen des wenigstens einen Parameterunterschieds zwischen dem wenigstens einen Uplink-Kanal und dem wenigstens einen Downlink-Kanal gemäß dem wenigstens einen Parameter des wenigstens einen Uplink-Kanals des wenigstens einen Antennenanschlusses von jedem Zugangspunkt und dem wenigstens einen Parameter des wenigstens einen Downlink-Kanals des wenigstens einen Antennenanschlusses von jedem Zugangspunkt;

wobei das Berechnen, durch das Berechnungsmodul, des wenigstens einen Parameterunterschieds zwischen dem wenigstens einen Uplink-Kanal und dem wenigstens einen Downlink-Kanal gemäß dem wenigstens einen Parameter des wenigstens einen Uplink-Kanals des wenigstens einen Antennenanschlusses von jedem Zugangspunkt und dem wenigstens einen Parameter des wenigstens einen Downlink-Kanals des wenigstens einen Antennenanschlusses von jedem Zugangspunkt Folgendes umfasst: unter der Bedingung, dass die UE den wenigstens einen Parameter des wenigstens einen Downlink-Kanals des wenigstens einen Antennenanschlusses in Form eines Codebuchs zurückleitet, Transponieren, durch das Berechnungsmodul, von wenigstens einer Uplink-Kanal-Matrix, die zum Anzeigen des wenigstens einen Parameters des wenigstens einen Uplink-Kanals des wenigstens einen Antennenanschlusses von jedem Zugangspunkt verwendet wird, um wenigstens eine äquivalente Downlink-Kanal-Matrix zu erhalten; Berechnen, durch das Berechnungsmodul, eines qualifizierten Codebuchs basierend auf der wenigstens einen äquivalenten Downlink-Kanal-Matrix; wobei das Berechnungsmodul das von der UE zurückgeleitete Codebuch mit dem von dem Berechnungsmodul berechneten Codebuch basierend auf der wenigstens einen äquivalenten Downlink-Kanal-Matrix vergleicht; und

Berechnen, durch das Berechnungsmodul, des wenigstens einen Parameterunterschieds zwischen dem wenigstens einen Uplink-Kanal und dem wenigstens einen Downlink-Kanal gemäß dem Vergleichsergebnis.

## Revendications

1. Une méthode d'étalonnage de points d'accès multiples, comprenant :

une cellule recevant au moins un paramètre d'au moins un canal de liaison descendante de points d'accès multiples, où au moins un paramètre est renvoyé par l'équipement de l'utilisateur (ÉU), et qui comprend un des éléments suivants : heure, phase, amplitude, heure et amplitude, et phase et amplitude (S102) ;

le calcul d'au moins une différence de paramètres entre au moins un canal de liaison ascendante et au moins un canal de liaison descendante des points d'accès multiples selon au moins un paramètre d'au moins un canal de liaison descendante (S 104) ; et

l'étalonnage des points d'accès multiples selon au moins une différence de paramètre (S106) ;

où avant que la cellule ne reçoive au moins un paramètre d'au moins un canal de liaison descendante renvoyé par l'ÉU, la méthode comprend en outre : une cellule configurant l'ÉU pour mesurer au moins un canal de liaison descendante ;

où la cellule configurant l'ÉU pour mesurer au moins un canal de liaison descendante comprend : à condition que les points d'accès multiples aient réalisé un auto-étalonnage, la cellule configurant l'ÉU pour mesurer au moins un canal de liaison descendante d'au moins un port d'antenne dans tous les ports d'antenne de chaque point d'accès dans les points d'accès multiples ;

où le calcul d'au moins une différence de paramètres entre au moins un canal de liaison ascendante et au moins un canal de liaison descendante selon au moins un paramètre d'au moins un canal de liaison descendante comprend :

la cellule mesurant au moins un paramètre d'au moins un canal de liaison ascendante d'au moins un port d'antenne de chaque point d'accès ; et

la cellule calculant au moins une différence de paramètres entre au moins un canal de liaison ascendante et au moins un canal de liaison descendante selon au moins un paramètre d'au moins un canal de liaison ascendante d'au moins un port d'antenne de chaque point d'accès, et au moins un paramètre d'au moins un canal de liaison descendante d'au moins un port d'antenne de chaque point d'accès ;

où la cellule calculant au moins une différence de paramètres entre au moins un canal de liaison ascendante et au moins un canal de liaison descendante selon au moins un paramètre d'au moins un canal de liaison ascendante d'au moins un port d'antenne pour chaque point d'accès et au moins un paramètre d'au moins un canal de liaison descendante d'au moins un port d'antenne de chaque point d'accès comprend :

à condition que l'ÉU renvoie au moins un paramètre d'au moins un canal de liaison descendante d'au moins un port d'antenne sous la forme d'un livre de codes, la cellule transposant au moins une matrice de canal de liaison ascendante utilisée pour indiquer au moins un paramètre d'au moins un canal de liaison ascendante d'au moins un port d'antenne pour chaque point d'accès pour obtenir au moins une matrice de canal de liaison descendante équivalente ;

la cellule calculant un livre de codes qualifiés basé sur au moins une matrice de canal de liaison descendante équivalente ;

la cellule comparant le livre de codes renvoyé par l'ÉU avec le livre de codes calculé par la cellule sur la base d'au moins une matrice de canal de liaison descendante équivalente ; et

la cellule calculant au moins une différence de paramètres entre au moins un canal de liaison ascendante et au moins un canal de liaison descendante selon le résultat de la comparaison.

2. Une méthode selon la revendication 1, **caractérisée en ce que** la cellule configurant l'ÉU pour mesurer au moins un canal de liaison descendante comprend : à condition que les points d'accès multiples n'aient pas réalisé d'auto-étalonnage, la cellule configurant l'ÉU pour mesurer les canaux de liaison descendante de tous les ports d'antenne.

3. Une méthode selon la revendication 2, **caractérisée en ce que** la cellule recevant au moins un paramètre d'au moins un canal de liaison descendante renvoyé par l'ÉU comprend : la cellule recevant les paramètres des canaux de liaison descendante de tous les ports d'antenne, où les paramètres sont renvoyés par l'ÉU d'une des manières suivantes : sous la forme d'un livre de codes, renvoyant les matrices de canal de liaison descendante, et renvoyant les informations caractéristiques principales des matrices de canal de liaison descendante.

4. Une méthode selon la revendication 2, **caractérisée en ce que** le calcul d'au moins une différence de paramètres entre au moins un canal de liaison ascendante et au moins un canal de liaison descendante selon au moins un paramètre d'au moins un canal de liaison descendante comprend :

la cellule mesurant les paramètres de canaux de liaison ascendante de tous les ports d'antenne ; et

la cellule calculant les différences de paramètres entre les canaux de liaison ascendante et les canaux de liaison descendante selon les paramètres des canaux de liaison ascendante de tous les ports d'antenne et les paramètres des canaux de liaison descendante de tous les ports d'antenne.

5. Une méthode selon la revendication 1, **caractérisée en ce que** la cellule recevant au moins un paramètre d'au moins un canal de liaison descendante renvoyé par l'ÉU comprend : à condition que la cellule configure l'ÉU pour mesurer au moins un canal de liaison descendante d'un port d'antenne dans tous les ports d'antenne de chaque point d'accès, la cellule recevant au moins un paramètre d'au mois un canal de liaison descendante du port d'antenne, renvoyé par l'une des manières suivantes par l'ÉU : renvoyer au moins une matrice de canal de liaison descendante, renvoyer les informations caractéristiques principales d'au moins une matrice de canal de liaison descendante, et renvoyer au moins une phase d'au moins un canal de liaison descendante d'un port unique.

6. Une méthode selon la revendication 1, **caractérisée en ce que** la cellule mesurant au moins un paramètre d'au moins un canal de liaison ascendante d'au moins un port d'antenne de chaque point d'accès comprend :

la cellule utilisant un signal envoyé à un point temporel adjacent à l'envoi d'un signal de liaison descendante d'un canal de liaison descendante en tant que signal de liaison ascendante d'un canal de liaison ascendante ; et

la cellule mesurant le signal de liaison ascendante pour obtenir au moins un paramètre d'au moins un canal de liaison ascendante d'au moins un port d'antenne de chaque point d'accès.

7. Une méthode selon la revendication 1, **caractérisée en ce que** la cellule mesurant au moins un paramètre d'au moins un canal de liaison ascendante d'au moins un port d'antenne de chaque point d'accès comprend : la cellule mesurant au moins un paramètre d'au moins un canal de liaison ascendante d'au moins un port d'antenne de chaque point d'accès par rapport à un ÉU unique au même moment.

8. Une méthode selon la revendication 1, **caractérisée en ce que** la cellule mesurant au moins un paramètre d'au moins un canal de liaison ascendante d'au moins un port d'antenne de chaque point d'accès comprend : des méthodes pour que chaque point d'accès respectif traite au moins un canal de liaison ascendante restant les mêmes.

9. Une méthode selon la revendication 1, **caractérisée en ce que** la cellule calculant au moins une différence de paramètres entre au moins un canal de liaison ascendante et au moins un canal de liaison descendante selon au moins un paramètre d'au moins un canal de liaison ascendante d'au moins un port d'antenne de chaque point d'accès et d'au moins un paramètre d'au moins un canal de liaison descendante d'au moins un port d'antenne de chaque point d'accès comprend en outre :

à condition que l'ÉU renvoie au moins un paramètre d'au moins un canal de liaison descendante d'au moins un port d'antenne en renvoyant au moins une matrice de canal de liaison descendante ou en renvoyant les informations caractéristiques principales d'au moins une matrice de canal de liaison descendante, la cellule transposant au moins une matrice de canal de liaison ascendante utilisée pour indiquer au moins un paramètre d'au moins un canal de liaison ascendante d'au moins un port d'antenne de chaque point d'accès, pour obtenir au moins une matrice de canal de liaison descendante équivalente ;

la cellule comparant au moins une matrice de canal de liaison descendante équivalente avec au moins une matrice de canal de liaison descendante renvoyée par l'ÉU ; et

la cellule calculant au moins une différence de paramètres entre au moins un canal de liaison ascendante et au moins un canal de liaison descendante selon le résultat de la comparaison.

10. Une méthode selon la revendication 1, **caractérisée en ce que** la cellule calculant au moins une différence de paramètres entre au moins un canal de liaison ascendante et au moins un canal de liaison descendante selon au moins un paramètre d'au moins un canal de liaison ascendante d'au moins un port d'antenne de chaque point d'accès, et au moins un paramètre d'au moins un canal de liaison descendante d'au moins un port d'antenne de chaque point d'accès comprend en outre : la cellule calculant uniquement la différence de paramètres entre un canal de liaison ascendante et un canal de liaison descendante pour chaque point d'accès.

11. Une méthode selon la revendication 1, **caractérisée en ce que** la cellule configurant l'ÉU pour mesurer au moins un canal de liaison descendante comprend : à condition que les points d'accès multiples aient réalisé un auto-étalonnage, la cellule configurant l'ÉU pour mesurer au moins un canal de liaison descendante d'au moins un port d'antenne dans tous les ports d'antenne des points d'accès multiples.

12. Une méthode selon la revendication 11, **caractérisée en ce que** la cellule configurant l'ÉU pour mesurer au moins un canal de liaison descendante d'au moins un port d'antenne dans tous les ports d'antenne des points d'accès multiples comprend : la cellule configurant l'ÉU pour mesurer les informations de précodage, où les informations de précodage sont calculées par l'ÉU selon au moins un canal entre l'ÉU et les points d'accès multiples, et au moins un canal est obtenu en mesurant selon au moins un signal de référence de liaison descendante envoyé par les points d'accès multiples.

13. Une méthode selon la revendication 12, **caractérisée en ce qu'**avant de calculer au moins une différence de paramètres entre au moins un canal de liaison ascendante et au moins un canal de liaison descendante des points d'accès multiples selon au moins un paramètre d'au moins un canal de liaison descendante, la méthode comprend en outre :

la cellule obtenant au moins un paramètre d'au moins un canal de liaison ascendante entre l'ÉU et les points d'accès multiples selon au moins un signal de référence de liaison ascendante ; et

la cellule obtenant au moins un paramètre d'au moins un canal de liaison descendante selon au moins un canal de liaison ascendante et utilisant la réciprocité du canal.

14. Une méthode selon la revendication 13, **caractérisée en ce que** la cellule obtenant le paramètre du canal de liaison ascendante entre l'ÉU et les points d'accès multiples selon un signal de référence de liaison ascendante comprend : le calcul de la différence de paramètres entre le canal de liaison ascendante et le canal de liaison descendante des points d'accès multiples selon le paramètre du canal de liaison descendante obtenu par les informations de précodage et utilisant la réciprocité du canal.

15. Une méthode selon l'une ou plusieurs des revendications 12 à 14, **caractérisée en ce que** le calcul d'au moins une différence de paramètres entre au moins un canal de liaison ascendante et au moins un canal de liaison descendante des points d'accès multiples selon au moins un paramètre d'au moins un canal de liaison descendante comprend :

étape A, sélectionner une première différence de paramètres et une deuxième différence de paramètres dans une plage de différence de paramètres possible pour obtenir respectivement un premier canal de liaison descendante corrigé correspondant à la première différence de paramètres, et un deuxième canal de liaison descendante corrigé correspondant à la deuxième différence de paramètres ;

étape B, en se basant sur les informations de précodage, déterminer, dans le premier canal de liaison descendante corrigé et le deuxième canal de liaison descendante corrigé, que le premier canal de liaison descendante corrigé est plus proche d'un vrai canal de liaison descendante ;

étape C, déterminer la première différence de paramètres qui servira de différence de paramètres calculée ; et recommencer les étapes A à C pour obtenir la différence de paramètres calculée.

**16.** Une méthode selon la revendication 12, **caractérisée en ce que** la cellule configurant l'ÉU pour mesurer les informations de précodage comprend : la cellule configurant l'ÉU pour mesurer l'indicateur de matrice de précodage (IMP), où l'IMP est calculé par l'EU selon au moins un canal entre l'ÉU et les points d'accès multiples dans la même cellule, et au moins un canal est obtenu en mesurant selon au moins un signal de référence spécifique à une cellule (SRC) envoyé par les points d'accès multiples.

**17.** Une méthode selon la revendication 16, **caractérisée en ce qu'**avant de calculer au moins une différence de paramètres entre au moins un canal de liaison ascendante et au moins un canal de liaison descendante des points d'accès multiples selon au moins un paramètre d'au moins un canal de liaison descendante, la méthode comprend en outre :

la cellule obtenant au moins un paramètre d'au moins un canal de liaison ascendante entre l'ÉU et les points d'accès multiples selon au moins un signal de référence de sondage de liaison ascendante (SRS) ; et la cellule obtenant au moins un paramètre d'au moins un canal de liaison descendante selon au moins un canal de liaison ascendante et utilisant la réciprocité du canal.

**18.** Une méthode selon la revendication 17, **caractérisée en ce que** le calcul d'au moins une différence de paramètres entre au moins un canal de liaison ascendante et au moins un canal de liaison descendante des points d'accès multiples selon au moins un paramètre d'au moins un canal de liaison descendante comprend : le calcul d'au moins une différence de paramètres entre au moins un canal de liaison ascendante et au moins un canal de liaison descendante des points d'accès multiples selon l'IMP et au moins un paramètre d'au moins un canal de liaison descendante obtenu en utilisant la réciprocité de canal.

**19.** Une méthode selon l'une ou plusieurs des revendications 16 à 18, **caractérisée en ce que** le calcul d'au moins une différence de paramètres entre au moins un canal de liaison ascendante et au moins un canal de liaison descendante des points d'accès multiples selon au moins un paramètre d'au moins un canal de liaison descendante comprend :

étape A, sélectionner une première différence de paramètres et une deuxième différence de paramètres dans une plage de différence de paramètres possible pour obtenir respectivement un premier canal de liaison descendante corrigé correspondant à la première différence de paramètres, et un deuxième canal de liaison descendante corrigé correspondant à la deuxième différence de paramètres ; étape B, en se basant sur l'IMP, déterminer, pour le premier canal de liaison descendante corrigé et le deuxième canal de liaison descendante corrigé, si le premier canal de liaison descendante corrigé est plus proche d'un vrai canal de liaison descendante ; étape C, déterminer la première différence de paramètres qui servira de différence de paramètres calculée ; et recommencer les étapes A à C pour obtenir la différence de paramètres calculée.

**20.** Un appareil d'étalonnage de points d'accès multiples, comprenant :

un module de réception (22), configuré pour recevoir au moins un paramètre d'au moins un canal de liaison descendante renvoyé par l'équipement de l'utilisateur (ÉU) ; un module de calcul (24), configuré pour calculer au moins une différence de paramètres entre au moins un canal de liaison ascendante et au moins un canal de liaison descendante selon au moins un paramètre d'au moins un canal de liaison descendante ; et un module d'étalonnage (26), configuré pour étalonner les points d'accès multiples selon au moins une différence de paramètre ; où, avant que le module de réception ne reçoive au moins un paramètre d'au moins un canal de liaison descendante renvoyé par l'ÉU, l'appareil configure l'ÉU pour mesurer au moins un canal de liaison descendante ; où l'appareil configure l'ÉU pour mesurer au moins un canal de liaison descendante comprend : à condition que les points d'accès multiples aient réalisé un auto-étalonnage, l'appareil configure l'ÉU pour mesurer au moins un canal de liaison descendante d'au moins un port d'antenne dans tous les ports d'antenne de chaque point d'accès des points d'accès multiples ; où le module de calcul configuré pour calculer au moins une différence de paramètres entre au moins un canal de liaison ascendante et au moins un canal de liaison descendante selon au moins un paramètre d'au moins un canal de liaison descendante comprend : le module de calcul mesure au moins un paramètre d'au moins un canal de liaison ascendante d'au moins un port d'antenne de chaque point d'accès ; et calcule au moins une différence de paramètres entre au moins un canal de liaison ascendante et au moins un canal de liaison descendante selon au moins un paramètre d'au moins un canal de liaison ascendante d'au moins un port d'antenne de chaque point d'accès, et au moins un paramètre d'au moins un canal de liaison descendante d'au moins un port d'antenne de chaque point d'accès ;

où le module de calcul calcule au moins une différence de paramètres entre au moins un canal de liaison ascendante et au moins un canal de liaison descendante selon au moins un paramètre d'au moins un canal de liaison ascendante d'au moins un port d'antenne de chaque point d'accès, et au moins un paramètre d'au moins un canal de liaison descendante d'au moins un port d'antenne de chaque point d'accès comprend : à condition que l'ÉU renvoie au moins un paramètre d'au moins un canal de liaison descendante d'au moins un port d'antenne sous la forme d'un livre de codes, le module de calcul transpose au moins une matrice de canal de liaison ascendante utilisée pour indiquer au moins un paramètre d'au moins un canal de liaison ascendante d'au moins un port d'antenne de chaque point d'accès pour obtenir au moins une matrice de canal de liaison descendante équivalente ; le module de calcul calcule un livre de codes qualifiés basé sur au moins une matrice de canal de liaison descendante équivalente ; le module de calcul comparant le livre de codes renvoyé par l'ÉU avec le livre de codes calculé par le module de calcul basé sur au moins une matrice de canal de liaison descendante équivalente ; et le module de calcul calcule au moins une différence de paramètres entre au moins un canal de liaison ascendante et au moins un canal de liaison descendante selon le résultat de la comparaison.

| A cell receives at least one parameter of at least one downlink channel fed back by a UE, wherein the at least one parameter comprises one of the following: time, phase, amplitude, time as well as amplitude, and phase as well as amplitude | S102 |

| According to the at least one parameter of the at least one downlink channel, calculate at least one parameter difference between at least one uplink channel and the at least one downlink channel of the multiple access points | S104 |

| According to the at least one parameter difference, calibrate multiple access points | S106 |

**Fig. 1**

Receiving module <u>22</u>

Calculation module <u>24</u>

Calibration module <u>26</u>

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011054144 A1

**Non-patent literature cited in the description**

- Performance Analysis of Antenna Calibration in Coordinated Multi-Point Transmission System. **FAN HUANG et al.** VTC. SPRING, 2010